# EUROPEAN PATENT APPLICATION

(11) **EP 4 668 010 A2**
(43) Date of publication of application: **24.12.2025**
(21) Application number: 25180340.9
(22) Date of filing: 03.06.2025
(51) Int. Cl.: G02F 1/1347, G02F 1/137

(54) **CHOLESTERIC LIQUID CRYSTAL DISPLAY DEVICE AND MANUFACTURING METHOD THEREOF**

(30) Priority: 19.06.2024 US 202463661704 P; 07.05.2025 US 202519201808
(71) Applicant: Iris Optronics Co., Ltd., Tainan City 711010 (TW)
(72) Inventor: YANG, Wu Chang, GUIREN DIST., TAINAN CITY (TW); LIN, Ching Shan, GUIREN DIST., TAINAN CITY (TW); LIN, Hui Che, GUIREN DIST., TAINAN CITY (TW); CHOU, Jung Chih, GUIREN DIST., TAINAN CITY (TW); LIAO, Chi Chang, GUIREN DIST., TAINAN CITY (TW)
(74) Representative: Vossius & Partner Patentanwälte Rechtsanwälte mbB

(57) **Abstract**

The present disclosure provides a double-layer cholesteric liquid crystal display device and a fabrication method thereof. The double-layer cholesteric liquid crystal display device includes a first liquid crystal layer, a second liquid crystal layer, a substrate, a first circuit pattern layer, a second circuit pattern layer and a second circuit pattern layer. The second liquid crystal layer is formed above the first liquid crystal layer. One of the first liquid crystal layer and the second liquid crystal layer comprises a left-handed cholesteric liquid crystal, and the other one of the first liquid crystal layer and the second liquid crystal layer comprises a right-handed cholesteric liquid crystal. The substrate is formed between the first liquid crystal layer and the second liquid crystal layer. The first circuit pattern layer is formed on a lower surface of the substrate for driving the first liquid crystal layer.

## Description

### CROSS-REFERENCE TO RELATED APPLICATIONS

This application claims the benefit of U.S. Provisional Application No. 63/661,704, filed June 19, 2024, the entire disclosure of which is incorporated by reference herein.

### BACKGROUND

### 1. Technical Field

The present disclosure relates to a cholesteric liquid crystal display device and a manufacturing method thereof, and more particularly to a double-layer cholesteric liquid crystal display device and a manufacturing method thereof.

### 2. Description of the Related Art

The popularity of reflective display structures has been accompanied by higher standards in terms of reflectivity and contrast ratio.

The optical properties of cholesteric liquid crystal (CLC) contain two types, one is left-handed cholesteric liquid crystal, and the other is right-handed cholesteric liquid crystal. However, mainly due to cost and complexity considerations, traditional architecture uses only one type of liquid crystal, resulting in a light utilization rate of only 50%, with reflectivity of terminal three-color RGB modules being only 30 to 40%. Large-area splicing or long-distance viewing requires reflectivity exceeding 60 to 80% for WHAT to be easily identifiable from a distance.

Therefore, there is a need for a display device with a driving circuit that utilizes both left-handed and right-handed liquid crystals to provide increased reflectivity and high-quality display color quality.

### SUMMARY

In some embodiments of the present disclosure, a double-layer cholesteric liquid crystal display device is provided. The double-layer cholesteric liquid crystal display device includes a first liquid crystal layer, a second liquid crystal layer, a substrate, a first circuit pattern layer, a second circuit pattern layer and a second circuit pattern layer. The second liquid crystal layer is formed above the first liquid crystal layer. One of the first liquid crystal layer and the second liquid crystal layer comprises a left-handed cholesteric liquid crystal, and the other one of the first liquid crystal layer and the second liquid crystal layer comprises a right-handed cholesteric liquid crystal. The substrate is formed between the first liquid crystal layer and the second liquid crystal layer. The first circuit pattern layer is formed on a lower surface of the substrate for driving the first liquid crystal layer. The second circuit pattern layer is formed on an upper surface of the substrate for driving the second liquid crystal layer. The first driving circuit is electrically connected to the first circuit pattern layer or the second circuit pattern layer to control the double-layer cholesteric liquid crystal display device.

In some embodiments of the present disclosure, a double-layer cholesteric liquid crystal display device is provided. The double-layer cholesteric liquid crystal display device includes a first liquid crystal layer, a second liquid crystal layer, a first substrate, a first conductive electrode, a second conductive electrode and a frame sealer. The first liquid crystal layer extends along a first direction. The second liquid crystal layer is formed above the first liquid crystal layer. One of the first liquid crystal layer and the second liquid crystal layer comprises a left-handed cholesteric liquid crystal, and the other one of the first liquid crystal layer and the second liquid crystal layer comprises a right-handed cholesteric liquid crystal. The first substrate extends along the first direction and is formed between the first liquid crystal layer and the second liquid crystal layer. The first conductive electrode extends along the first direction and is formed on a lower surface of the first substrate for driving the first liquid crystal layer. The second conductive electrode is formed on an upper surface of the first substrate for driving the second liquid crystal layer. The frame sealer extends along a second direction (Y-axis) vertical to the first direction. The first conductive electrode extends outside the frame sealer so that the frame sealer is surrounded by the first conductive electrode.

In some embodiments of the present disclosure, a method for manufacturing a double-layer cholesteric liquid crystal display device is provided. The method includes forming a first circuit pattern layer on a lower surface of the substrate; forming a second circuit pattern layer on an upper surface of the substrate; forming a first liquid crystal layer below the first circuit pattern layer, which is configured to drive the first liquid crystal layer; forming a second liquid crystal layer above the second circuit pattern layer, which is configured to drive the second liquid crystal layer, wherein one of the first liquid crystal layer and the second liquid crystal layer comprises a left-handed cholesteric liquid crystal, and the other one of the first liquid crystal layer and the second liquid crystal layer comprises a right-handed cholesteric liquid crystal; and forming a first driving circuit electrically connected to the first circuit pattern layer or the second circuit pattern layer to control the double-layer cholesteric liquid crystal display device.

### BRIEF DESCRIPTION OF THE DRAWINGS

Aspects of the present disclosure are readily understood from the following detailed description when read with the accompanying figures. It should be noted that various features may not be drawn to scale. In fact, the dimensions of the various features may have arbitrarily increased or reduced for clarity of discussion.
FIG. 1A is a cross-sectional view of a cholesteric liquid crystal display device according to some embodiments of the present disclosure.
FIG. 1B is a three-dimensional schematic view of a cholesteric liquid crystal display device according to some embodiments of the present disclosure.
FIG. 2A is another cross-sectional view of a cholesteric liquid crystal display device according to some embodiments of the present disclosure.
FIG. 2B is another three-dimensional schematic view of a cholesteric liquid crystal display device according to some embodiments of the present disclosure.
FIG. 2C is another cross-sectional view of a cholesteric liquid crystal display device according to some embodiments of the present disclosure.
FIG. 3A is another cross-sectional view of a cholesteric liquid crystal display device according to some embodiments of the present disclosure.
FIG. 3B is another three-dimensional schematic view of a cholesteric liquid crystal display device according to some embodiments of the present disclosure.
FIG. 3C is another cross-sectional view of a cholesteric liquid crystal display device according to some embodiments of the present disclosure.
FIG. 4A is another cross-sectional view of a cholesteric liquid crystal display device according to some embodiments of the present disclosure.
FIG. 4B is another three-dimensional schematic view of a cholesteric liquid crystal display device according to some embodiments of the present disclosure.
FIG. 5A is another cross-sectional view of a cholesteric liquid crystal display device according to some embodiments of the present disclosure.
FIG. 5B is another three-dimensional schematic view of a cholesteric liquid crystal display device according to some embodiments of the present disclosure.
FIG. 6A is another cross-sectional view of a cholesteric liquid crystal display device according to some embodiments of the present disclosure.
FIG. 6B is another three-dimensional schematic view of a cholesteric liquid crystal display device according to some embodiments of the present disclosure.
FIG. 7A is another cross-sectional view of a cholesteric liquid crystal display device according to some embodiments of the present disclosure.
FIG. 7B is another three-dimensional schematic view of a cholesteric liquid crystal display device according to some embodiments of the present disclosure.
FIG. 8A is another cross-sectional view of a cholesteric liquid crystal display device according to some embodiments of the present disclosure.
FIG. 8B is another three-dimensional schematic view of a cholesteric liquid crystal display device according to some embodiments of the present disclosure.
FIG. 8C is another cross-sectional view of a cholesteric liquid crystal display device according to some embodiments of the present disclosure.
FIG. 9 is a cross-sectional view of a cholesteric liquid crystal display device stacking two display modules according to some embodiments of the present disclosure.
FIG. 10 is a cross-sectional view of a cholesteric liquid crystal display device stacking three display modules according to some embodiments of the present disclosure.
FIG. 11 is another cross-sectional view of a cholesteric liquid crystal display device stacking three display modules according to some embodiments of the present disclosure.
FIG. 12 is a cross-sectional view of a cholesteric liquid crystal display device according to some embodiments of the present disclosure.
FIG. 13A is a cross-sectional view of a cholesteric liquid crystal display device according to some embodiments of the present disclosure.
FIG. 13B is another cross-sectional view of a cholesteric liquid crystal display device according to some embodiments of the present disclosure.
FIG. 14 illustrates a flow chart including operations for manufacturing a cholesteric liquid crystal display device according to some embodiments of the present disclosure.
FIGs. 15A, 15B, and 15C illustrate some operations for manufacturing a cholesteric liquid crystal display device according to some embodiments of the present disclosure.
FIG. 16 is a cross-sectional view showing the cholesteric liquid crystal display device being cut according to some embodiments of the present disclosure.
FIG. 17 is a cross-sectional view of a cholesteric liquid crystal display device stacking three display modules according to some embodiments of the present disclosure.
FIG. 18 is another cross-sectional view of a cholesteric liquid crystal display device stacking three display modules according to some embodiments of the present disclosure.

### DETAILED DESCRIPTION

The following disclosure provides for many different embodiments, or examples, for implementing different features of the provided subject matter. Specific examples of components and arrangements are described below. These are, of course, merely examples and are not intended to be limiting. In the present disclosure, reference to the formation of a first feature over or on a second feature in the description that follows may include embodiments in which the first and second features are formed in direct contact, and may also include embodiments in which additional features may have formed between the first and second features, such that the first and second features may not be in direct contact. In addition, the present disclosure may repeat reference numerals and/or letters in the various examples. This repetition is for the purpose of simplicity and clarity and does not in itself dictate a relationship between the various embodiments and/or configurations discussed.

Embodiments of the present disclosure are discussed in detail below. It should be appreciated, however, that the present disclosure provides many applicable concepts that can be embodied in a wide variety of specific contexts. The specific embodiments discussed are merely illustrative and do not limit the scope of the disclosure.

Cholesteric liquid crystal displays (Ch-LCD) are bistable and can maintain displayed content without consuming power. They are commonly used in temperature sensor displays, e-books, e-paper, electronic whiteboards, and other products.

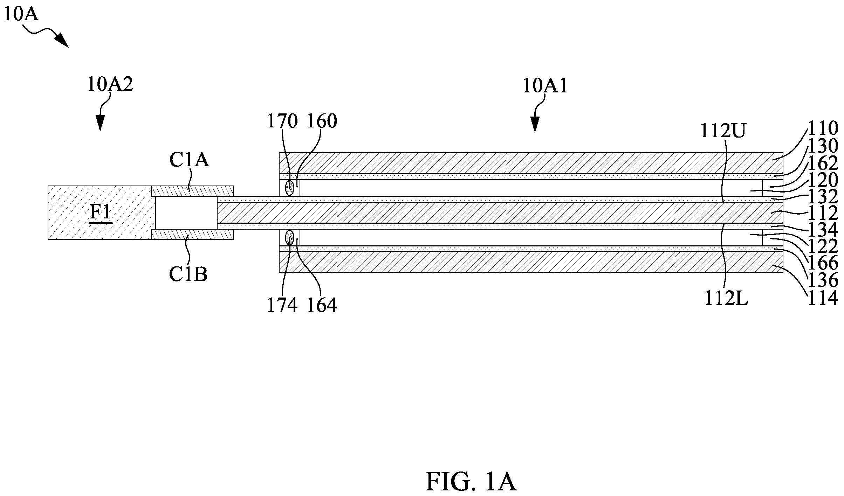

FIG. 1A is a cross-sectional view of a cholesteric liquid crystal display device 10A according to some embodiments of the present disclosure. The cholesteric liquid crystal display device 10A includes a display structure 10A1 and a driving circuit 10A2 for driving the display structure. The display structure 10A1 can include a cholesteric liquid crystal display (Ch-LCD). The Ch-LCD is bistable and can maintain displayed content without consuming power. It is commonly used in temperature sensor displays, e-books, e-paper, electronic whiteboards, and other products.

The display structure 10A1 includes three substrates 110, 112 and 114, two liquid crystal layers 120 and 122, four circuit pattern layers 130, 132, 134 and 136, a plurality of sealing materials 160, 162, 164, and 166, and a plurality of conductive balls 170 and 174. The substrates 110, 112 and 114 can include a glass. The substrates 110, 112 and 114 may be, for example, a layered semiconductor such as silicon, silicon germanium, silicon-on-insulator, or silicon germanium-on-insulator.

The liquid crystal layers 120 and 122 can include cholesteric liquid crystal. In some embodiments, the liquid crystal layer 120 is a left-handed cholesteric liquid crystal, and the liquid crystal layer 122 is a right-handed cholesteric liquid crystal. In some embodiments, the liquid crystal layer 120 is a right-handed cholesteric liquid crystal, and the liquid crystal layer 122 is a left-handed cholesteric liquid crystal. The liquid crystal layer 120 can be configured to reflect a first color light. The liquid crystal layer 122 can be configured to reflect a second color light in a wavelength substantially the same as the liquid crystal layer 120. The liquid crystal layer 122 can be configured to reflect the second color light in a wavelength different from the liquid crystal layer 120.

The substrate 112 may be disposed between the substrate 110 and the substrate 114. The substrate 112 may be disposed between the liquid crystal layer 120 and the liquid crystal layer 122. The substrate 112 may include an upper surface 112U and a lower surface 112L. The circuit pattern layer 130 can be formed below the substrate 110 to drive the liquid crystal layer 120. The circuit pattern layer 130 can be in direct contact with the substrate 110. The circuit pattern layer 132 can be formed on the upper surface 112U of the substrate 112 to drive the liquid crystal layer 120. The circuit pattern layer 132 can be in direct contact with the substrate 112. The circuit pattern layer 134 can be formed below the substrate 112 to drive the liquid crystal layer 122. The circuit pattern layer 134 can be formed on the lower surface 112L of the substrate 112. The circuit pattern layer 134 can be in direct contact with the substrate 112. The circuit pattern layer 136 can be formed above the substrate 114 to drive the liquid crystal layer 122. The circuit pattern layer 136 can be in direct contact with the substrate 114. The circuit pattern layers 130, 132, 134 and 136 can include an indium tin oxide (ITO) electrode. The circuit pattern layers can be, or include, a conductive compound or a conductive material such as a metal or metal alloy.

A number of sealing materials 160 and 164 can be formed around the display structure 10A1. The sealing material 160 is disposed between the substrates 110 and 112 to accommodate the liquid crystal layer 120. The sealing material 164 is disposed between the substrates 112 and 114 to accommodate the liquid crystal layer 122. In addition, the sealing materials 160 and 164 containing conductive balls 170 and 174 are formed on a corresponding area where electrically connect two adjacent circuit pattern layers. For example, the conductive ball 170 may be surrounded by the sealing material 160 for electrically connecting the circuit pattern layers 130 and 132. For example, the conductive ball 174 may be surrounded by the sealing material 164 for electrically connecting the circuit pattern layers 134 and 136.

The driving circuit 10A2 includes a flexible printed circuit (FPC) F1 and two chip-on-films (COFs) C1A and C1B. The COFs C1A and C1B can include integrated circuits to generate electrical signals for controlling the display structure 10A1. In some embodiments, the COFs C1A and C1B and the FPC F1 are electrically connected to the left side of the display structure 10A1. The COFs C1A and C1B are electrically coupled between the FPC F1 and the display structure 10A1. The COFs C1A and C1B are electrically connected to the circuit pattern layers 132 and 134 to provide driving signals and control the display structure 10A1. The FPC F1 can include a flexible printed circuit board, such as a paper-based copper foil laminate, a composite copper foil laminate, or a polymer-impregnated glass-fiber-based copper foil laminate.

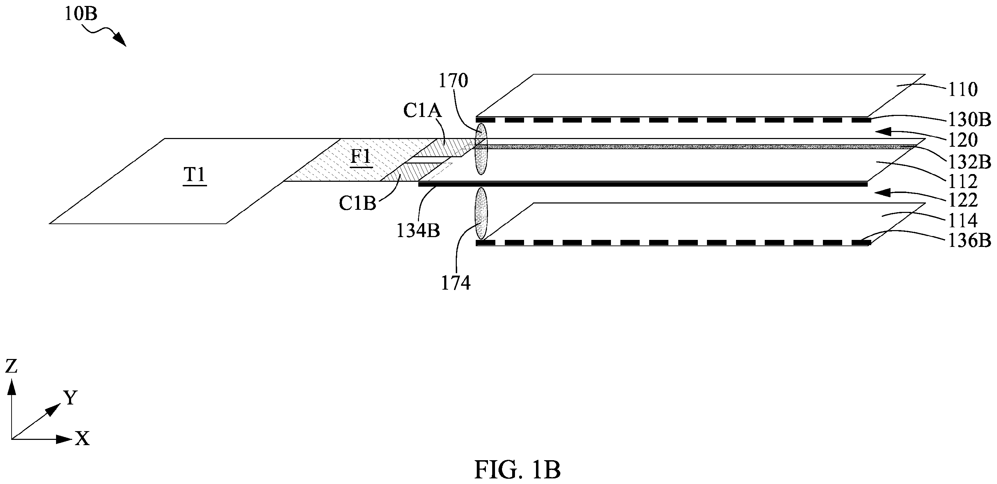

FIG. 1B is a three-dimensional schematic view of a cholesteric liquid crystal display device 10B according to some embodiments of the present disclosure. The cholesteric liquid crystal display device 10B of FIG. 1B is similar to the cholesteric liquid crystal display device 10A of FIG. 1A, except for the differences as follows.

The cholesteric liquid crystal display device 10B can include four ITO electrodes 130B, 132B, 134B and 136B. The ITO electrodes 130B, 132B, 134B and 136B of FIG. 1B can correspond to the circuit pattern layers 130, 132, 134 and 136 of FIG. 1A, respectively. The substrates 110, 112 and 114, and the ITO electrodes 130B, 132B, 134B and 136B can extend along the X-axis. The conductive balls 170 and 174 can extend along the Z-axis vertical to the X-axis.

In some embodiments, the cholesteric liquid crystal display device 10B further includes a timing controller (TCON) board T1 which is electrically connected to the FPC F1. The TCON board T1 can include a flexible printed circuit board, such as a paper-based copper foil laminate, a composite copper foil laminate, or a polymer-impregnated glass-fiber-based copper foil laminate. The FPC F1 is electrically connected to two COFs C1A and C1B. The COFs C1A and C1B are bonded to the two ITO electrodes 132B and 134B. The COF C1A may be bonded to the ITO electrode 132B. The COF C1B may be bonded to the ITO electrode 134B. The COF C1A is bonded to the upper surface of the substrate 112, and the COF C1B is bonded to the lower surface of the substrate 112. The COF C1A is electrically connected to the ITO electrode 132B on the upper surface of the substrate 112. The COF C1B is electrically connected to the ITO electrode 134B on the lower surface of the substrate 112. The COFs C1A and C1B are shown as two rectangular areas along the Y-axis, which is perpendicular to the X-axis and Z-axis. The COFs C1A and C1B may include, but are not limited to, rectangular shapes. The COFs C1A and C1B are physically spaced apart from each other. The COFs C1A and C1B can be spaced apart from each other on the projection of the plane of the X-axis and Y-axis. The COFs C1A and C1B can partially overlap with each other on the projection of the plane of the X-axis and Y-axis.

The cholesteric liquid crystal display device 10A or 10B of the present disclosure is provided with a driving circuit 10A2 that utilizes left-handed cholesteric liquid crystal and right-handed cholesteric liquid crystal. The driving circuit 10A2 can include an FPC, a COF, a via and/or other electronic elements, and can be provided at one or two sides of the display structure 10A1 as needed. Therefore, the cholesteric liquid crystal display device 10A or 10B can increase reflectivity and provide high-quality display color at a wider viewing angle.

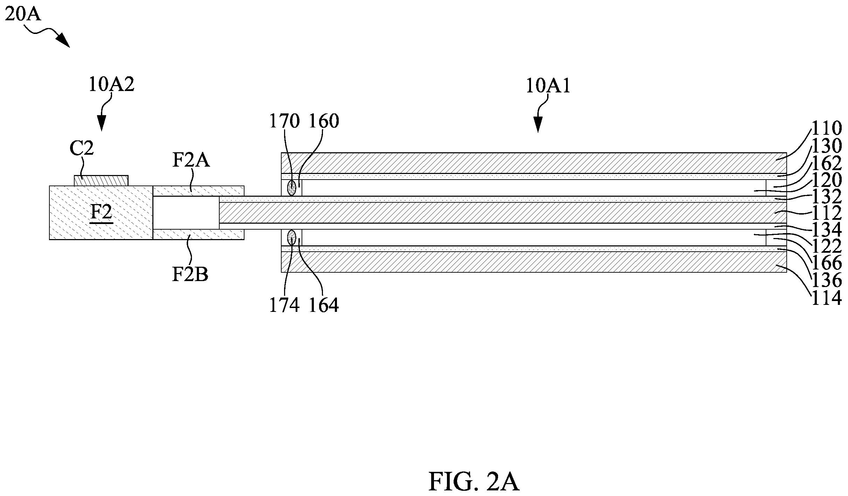

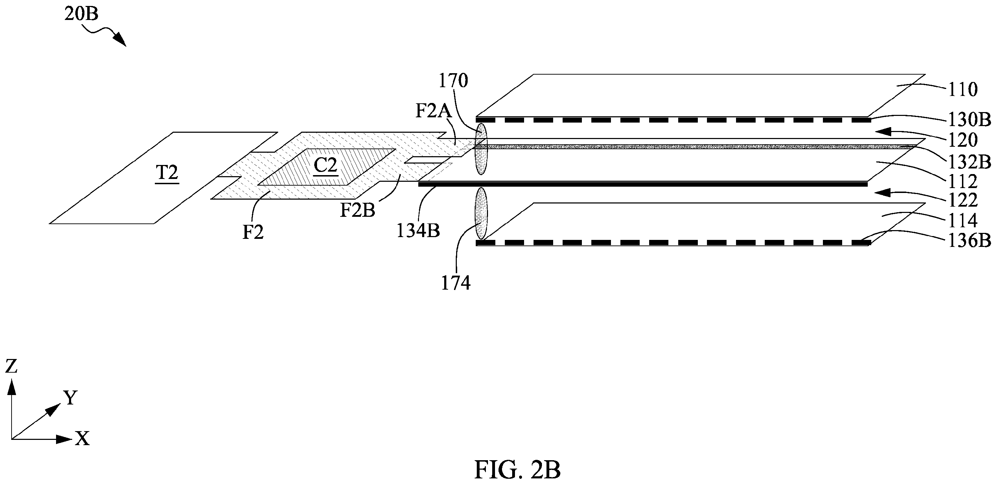

FIG. 2A is a cross-sectional view of a cholesteric liquid crystal display device 20A according to some embodiments of the present disclosure. FIG. 2B is another three-dimensional schematic view of a cholesteric liquid crystal display device 20B according to some embodiments of the present disclosure. The cholesteric liquid crystal display device 20A of FIG. 2A is similar to the cholesteric liquid crystal display device 10A of FIG. 1A, and the cholesteric liquid crystal display device 20B of FIG. 2B is similar to the cholesteric liquid crystal display device 10B of FIG. 1B, except for the differences as follows.

Each of the cholesteric liquid crystal display devices 20A and 20B includes only one COF C2. Compared to the two COFs C1A and C1B of the cholesteric liquid crystal display devices 10A and 10B, the number of the COFs is reduced to one so as to decrease the manufacturing cost for the cholesteric liquid crystal display device 20A and 20B. As shown in FIG. 2A, the COF C2 is disposed above or on the FPC F2. The COF C2 may be disposed below or beneath the FPC F2. As shown in FIG. 2B, the cholesteric liquid crystal display device 20B further includes the TCON board T2 electrically connected to the FPC F2. The FPC F2 may be electrically connected to two circuit pattern layers 132 and 134 as shown in FIG. 2A. The FPC F2 may be electrically connected to two ITO electrodes 132B and 134B as shown in FIG. 2B.

The FPC F2 can further include two FPC sections F2A and F2B shown as two rectangular areas along the Y-axis, which is perpendicular to the X-axis and Z-axis. The FPC F2 is bonded to the two ITO electrodes 132B and 134B through the FPC sections F2A and F2B. The substrate 112 is between two FPC sections F2A and F2B. The FPC sections F2A and F2B are physically spaced apart from each other. The FPC sections F2A and F2B can be spaced apart from each other on the projection of the plane of the X-axis and Y-axis. The FPC sections F2A and F2B can partially overlap with each other on the projection of the plane of the X-axis and Y-axis. The COF C2 and the FPC sections F2A and F2B can be spaced apart from each other on the projection of the plane of the X-axis and Y-axis. The COF C2 can be higher than the FPC sections F2A and F2B along the Z-axis.

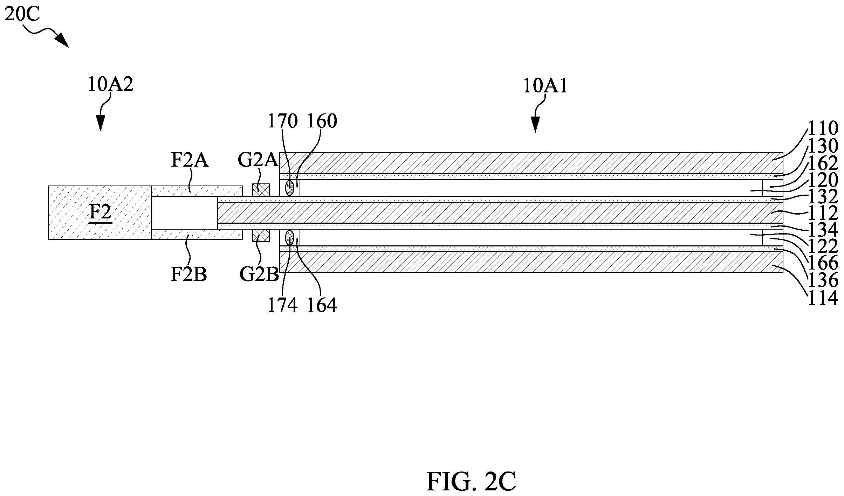

FIG. 2C is another cross-sectional view of a cholesteric liquid crystal display device 20C according to some embodiments of the present disclosure. The cholesteric liquid crystal display device 20C of FIG. 2C is similar to the cholesteric liquid crystal display device 20A of FIG. 2A, except for the differences as follows.

Two chip on glasses (COGs) G2A and G2B are disposed above and below the substrate 112, respectively. The cholesteric liquid crystal display device 20C can include or be implemented by one or more COGs. The COGs G2A and G2B can include integrated circuits to generate electrical signals for controlling the cholesteric liquid crystal display device 20C. The COGs G2A and G2B are electrically connected to the circuit pattern layers 132 and 134 to provide driving signals and control the cholesteric liquid crystal display device 20C. The COG G2A is at the same elevation level with the liquid crystal layer 120, and the COG G2B is at the same elevation level with the liquid crystal layer 122. The COG G2A is electrically connected to the circuit pattern layer 132 or the ITO electrode 132B. The COG G2B is electrically connected to the circuit pattern layer 134 or the ITO electrode 134B. The COGs G2A and G2B are disposed on the substrate 112 rather than the FPC F2 in order to improve the reliability of the cholesteric liquid crystal display device 20C.

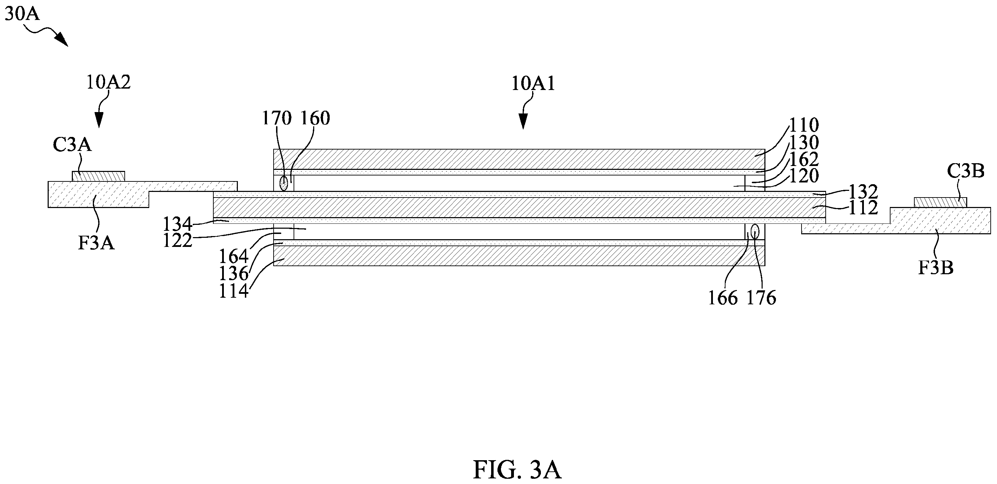

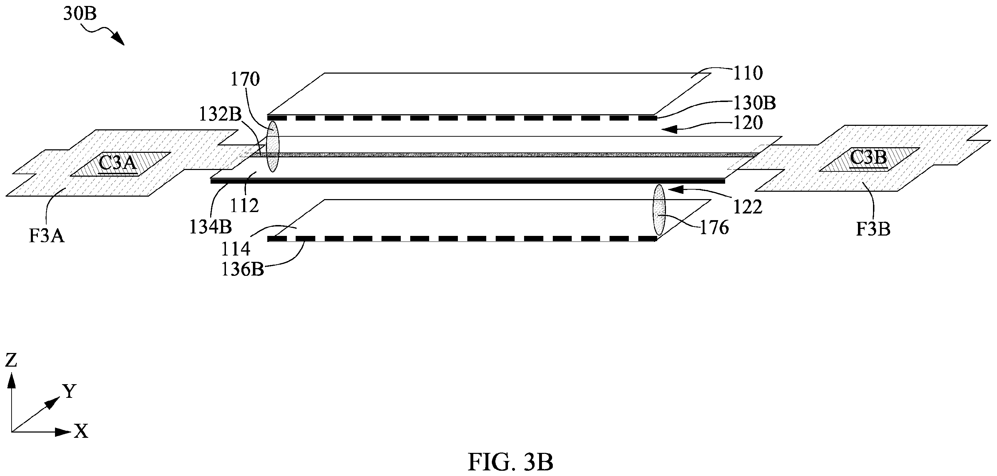

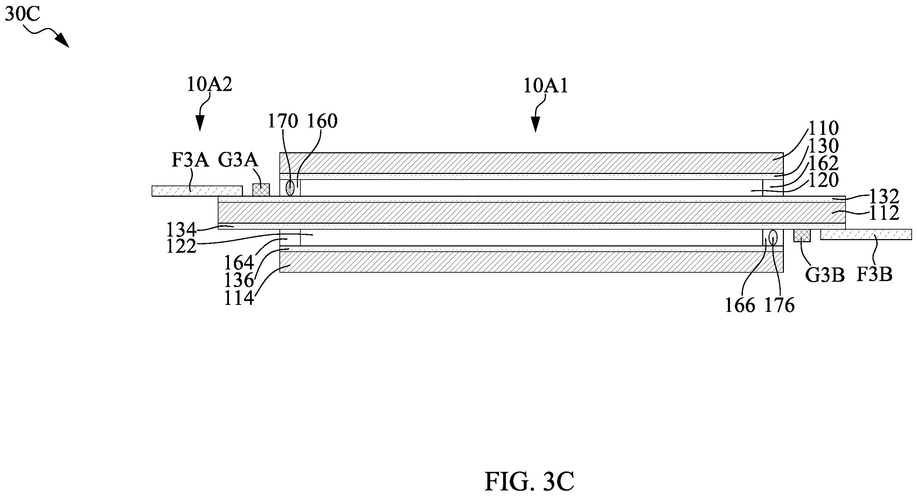

FIG. 3A is a cross-sectional view of a cholesteric liquid crystal display device 30A according to some embodiments of the present disclosure. FIG. 3B is another three-dimensional schematic view of a cholesteric liquid crystal display device 30B according to some embodiments of the present disclosure. FIG. 3C is another three-dimensional schematic view of a cholesteric liquid crystal display device 30C according to some embodiments of the present disclosure. The cholesteric liquid crystal display device 30A of FIG. 3A is similar to the cholesteric liquid crystal display device 20A of FIG. 2A, the cholesteric liquid crystal display device 30B of FIG. 3B is similar to the cholesteric liquid crystal display device 20B of FIG. 2B, and the cholesteric liquid crystal display device 30C of FIG. 3C is similar to the cholesteric liquid crystal display device 20C of FIG. 2C, except for the differences as follows. In some embodiments, the conductive ball 176 and the sealing material 166 are disposed near the FPC F3B and the COF C3B. The conductive ball 176 can be formed inside the sealing material 166 to provide support for the FPC F3B and the COF C3B.

The COF C3A is disposed on the FPC F3A, and the COF C3B is disposed on the FPC F3B. As shown in FIG. 3A and FIG. 3B, the FPCs F3A and F3B and the COFs C3A and C3B are provided or bonded symmetrically on two sides of the display structure 10A1. The FPCs F3A and F3B are provided on opposite sides of the substrate 112. The COFs C3A and C3B and FPCs F3A and F3B are provided on opposite sides of the substrate 112. The COF C3A is formed near the left side of the substrate 112. The COF C3A is electrically connected to the circuit pattern layer 132 through the FPC F3A. The FPC F3A can extend above the substrate 112. The COF C3B is formed near the right side of the substrate 112. The COF C3B is electrically connected to the circuit pattern layer 134 through the FPC F3B. The FPC F3B can extend below the substrate 112. The COF C3A may be on the FPC F3A and the COF C3B may be on the FPC F3B. The COF C3A may be on the FPC F3A and the COF C3B may be below the FPC F3B. The area of the FPC F3A bonded to the ITO electrode 132B as shown in FIG. 3B is wider than the area of the FPC sections F2A and F2B bonded to the ITO electrode 132B as shown in FIG. 2B, and thus the routing and wiring for the cholesteric liquid crystal display device 30B can be more easy and efficient.

In addition, as shown in FIG. 3C, the COG G3A is disposed between the FPC F3A and the liquid crystal layer 120. The COG G3B is disposed between the FPC F3B and the liquid crystal layer 122. The COGs G3A and G3B are disposed on the substrate 112 rather than the FPCs F3A and F3B in order to improve the reliability of the cholesteric liquid crystal display device 30C.

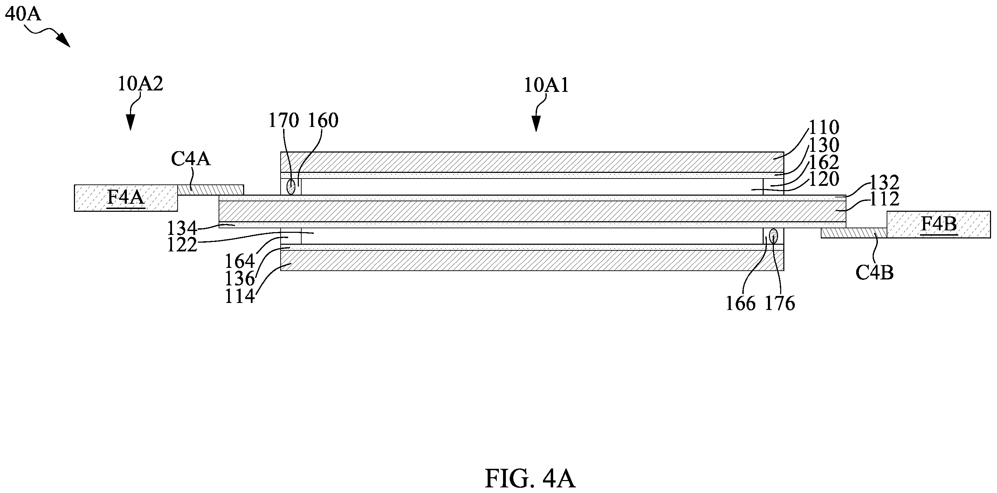

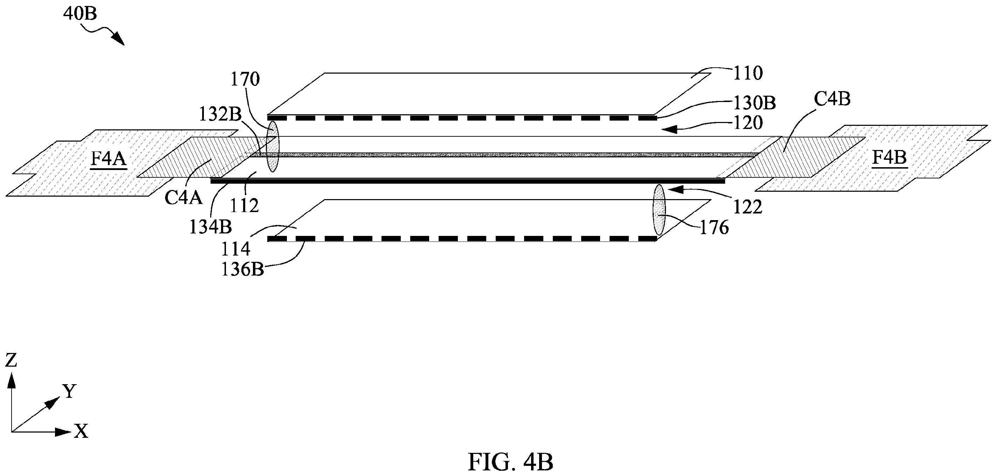

FIG. 4A is a cross-sectional view of a cholesteric liquid crystal display device 40A according to some embodiments of the present disclosure. FIG. 4B is another three-dimensional schematic view of a cholesteric liquid crystal display device 40B according to some embodiments of the present disclosure. The cholesteric liquid crystal display device 40A of FIG. 4A is similar to the cholesteric liquid crystal display device 30A of FIG. 3A, and the cholesteric liquid crystal display device 40B of FIG. 4B is similar to the cholesteric liquid crystal display device 30B of FIG. 3B, except for the differences as follows.

The COF C4A is formed between the FPC F4A and the liquid crystal layer 120. The C4A is electrically connected to the circuit pattern layer 132. The C4A can be at the same elevation level with the conductive ball 170. The COF C4B is formed between the FPC F4B and the liquid crystal layer 122. The C4B is electrically connected to the circuit pattern layer 134. The C4B can be at the same elevation level with the conductive ball 176.

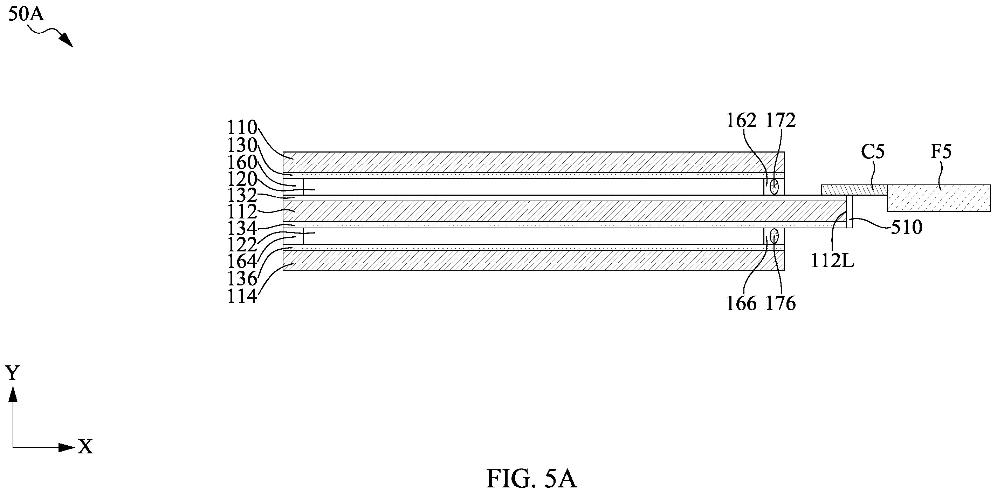

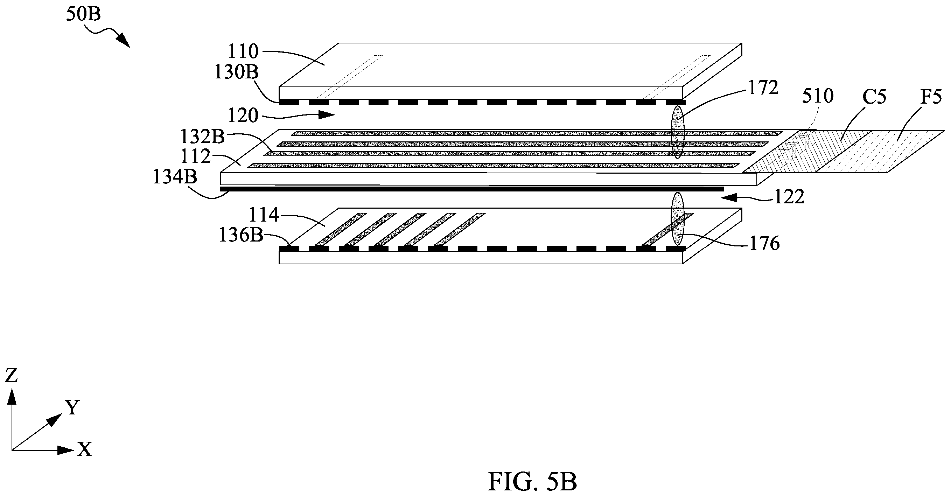

FIG. 5A is a cross-sectional view of a cholesteric liquid crystal display device 50A according to some embodiments of the present disclosure. FIG. 5B is another three-dimensional schematic view of a cholesteric liquid crystal display device 50B according to some embodiments of the present disclosure. The cholesteric liquid crystal display device 50A of FIG. 5A is similar to the cholesteric liquid crystal display device 40A of FIG. 4A, and the cholesteric liquid crystal display device 50B of FIG. 5B is similar to the cholesteric liquid crystal display device 40B of FIG. 4B, except for the differences as follows.

The cholesteric liquid crystal display device 50A includes a conductive structure 510 on the right side of the substrate 112. The conductive structure 510 can be in direct contact with the lateral surface 112L of the substrate 112. The conductive structure 510 and a portion of the circuit pattern layer 132 can be covered by the COF C5. The COF C5 is formed between the FPC F5 and the conductive ball 172. The COF C5 is electrically connected to the conductive structure 510 and the circuit pattern layer 132. The two circuit pattern layers 132 and 134 can be electrically connected through the conductive structure 510. The conductive structure 510 can be, or include, a conductive material such as a metal or metal alloy.

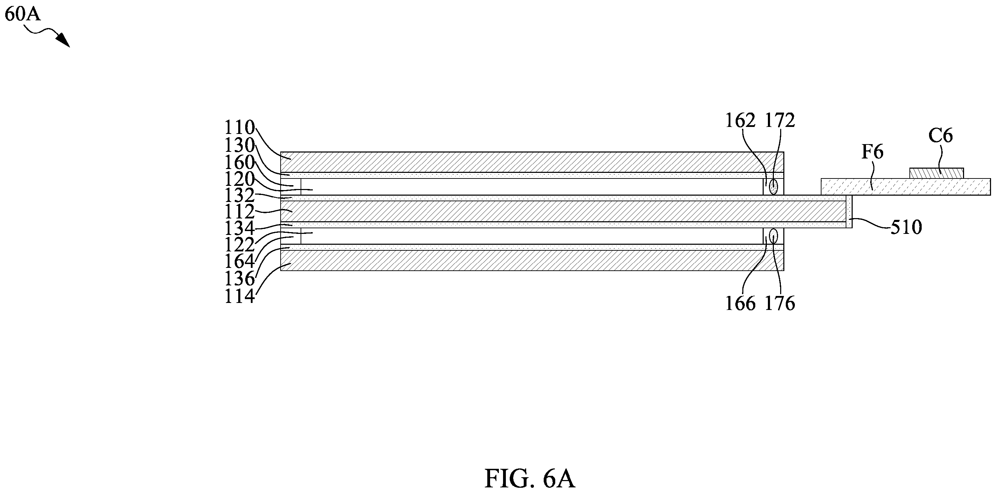

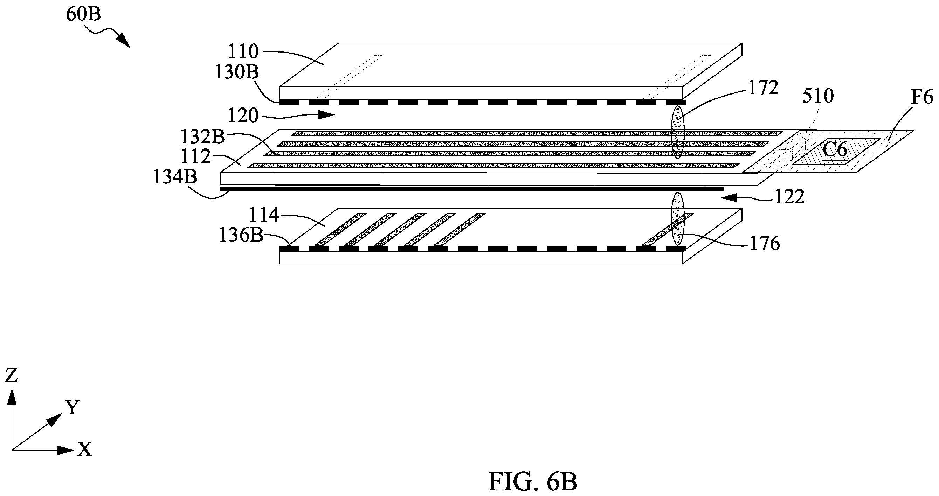

FIG. 6A is a cross-sectional view of a cholesteric liquid crystal display device 60A according to some embodiments of the present disclosure. FIG. 6B is another three-dimensional schematic view of a cholesteric liquid crystal display device 60B according to some embodiments of the present disclosure. The cholesteric liquid crystal display device 60A of FIG. 6A is similar to the cholesteric liquid crystal display device 50A of FIG. 5A, and the cholesteric liquid crystal display device 60B of FIG. 6B is similar to the cholesteric liquid crystal display device 50B of FIG. 5B, except for the differences as follows.

The COF C6 is disposed above the FPC F6 at the right side of the substrate 112. The FPC F6 covers the conductive structure 510 and a portion of the circuit pattern layer 132. The COF C6 is electrically connected to the conductive structure 510 and the circuit pattern layer 132. The two circuit pattern layers 132 and 134 can be electrically connected through the conductive structure 510. The conductive structure 510 can be, or include, a conductive material such as a metal or metal alloy.

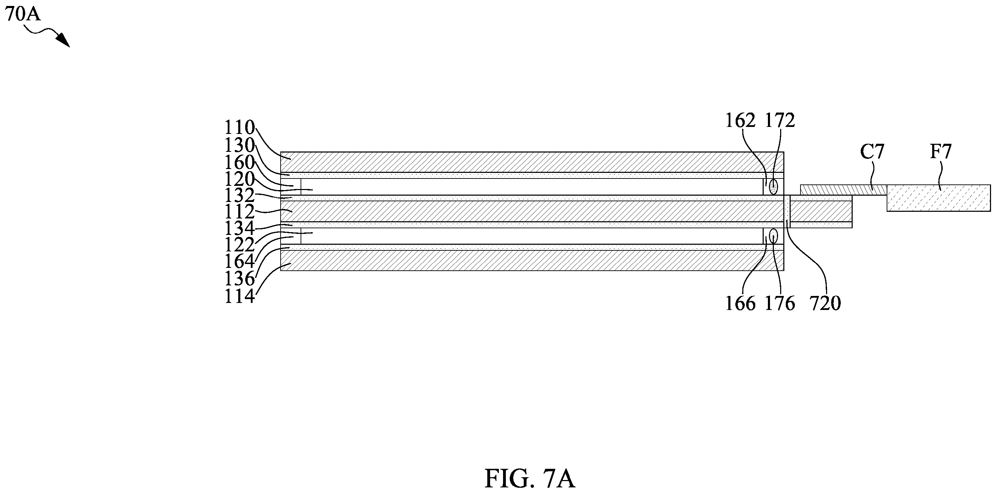

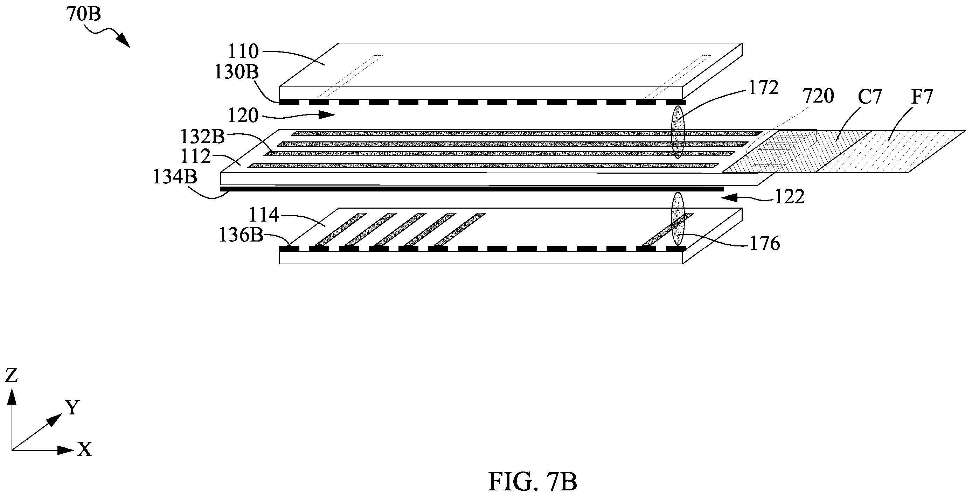

FIG. 7A is a cross-sectional view of a cholesteric liquid crystal display device 70A according to some embodiments of the present disclosure. FIG. 7B is another three-dimensional schematic view of a cholesteric liquid crystal display device 70B according to some embodiments of the present disclosure. The cholesteric liquid crystal display device 70A of FIG. 7A is similar to the cholesteric liquid crystal display device 50A of FIG. 5A, and the cholesteric liquid crystal display device 70B of FIG. 7B is similar to the cholesteric liquid crystal display device 50B of FIG. 5B, except for the differences as follows.

The cholesteric liquid crystal display device 70A includes a via structure 720 close to the right side of the substrate 112. The via structure 720 can penetrate the substrate 112 and the circuit pattern layers 132 and 134. A portion of the circuit pattern layer 132 is covered by the COF C7. The via structure 720 is not covered by the COF C7. The COF C7 is formed between the FPC F7 and the conductive ball 172. The COF C7 is electrically connected to the via structure 720 and the circuit pattern layer 132. The two circuit pattern layers 132 and 134 can be electrically connected through the via structure 720. The via structure 720 can be, or include, a conductive material such as a metal or metal alloy.

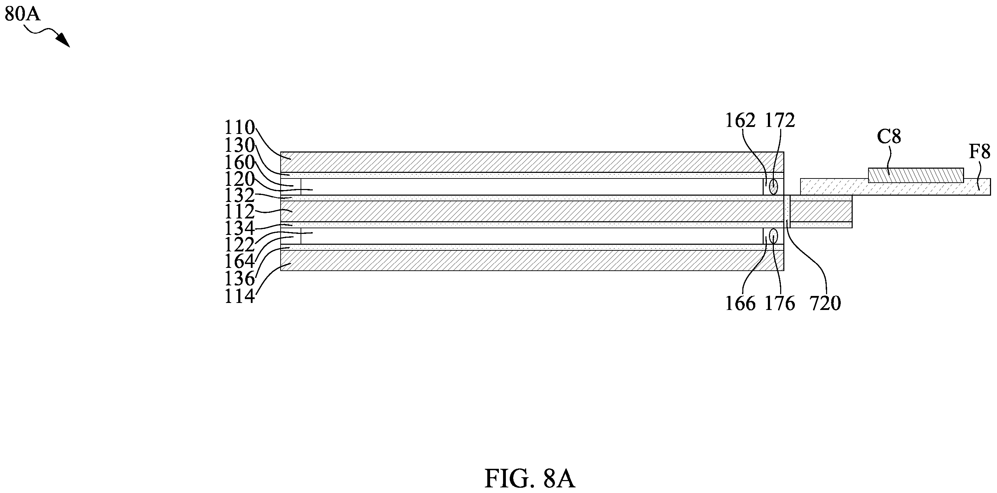

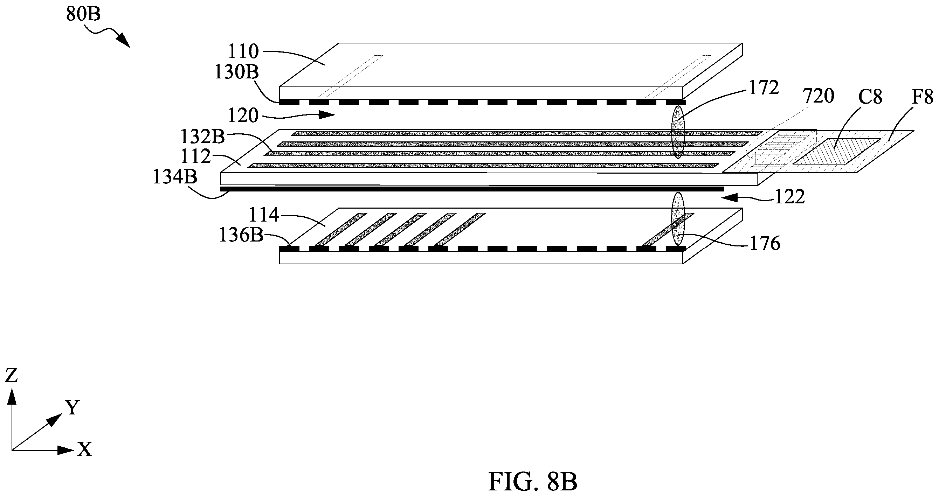

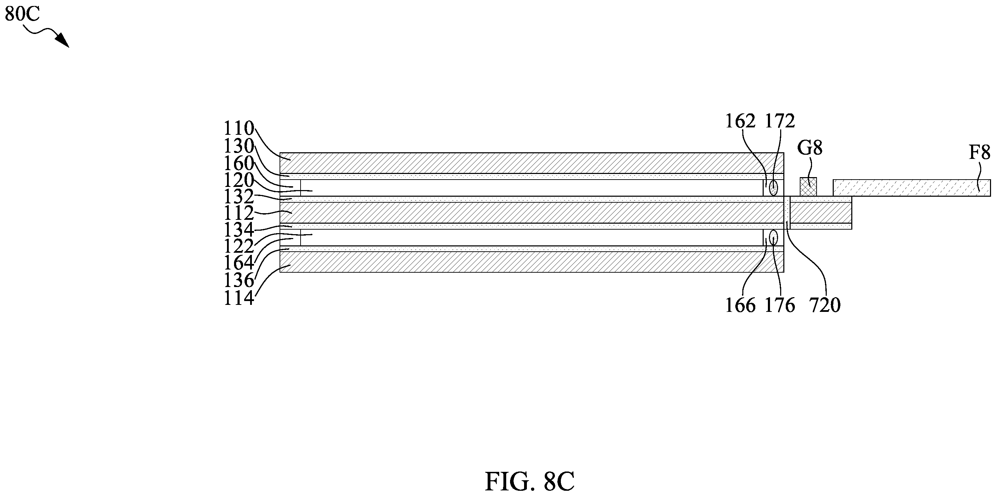

FIG. 8A is a cross-sectional view of a cholesteric liquid crystal display device 80A according to some embodiments of the present disclosure. FIG. 8B is another three-dimensional schematic view of a cholesteric liquid crystal display device 80B according to some embodiments of the present disclosure. FIG. 8C is another three-dimensional schematic view of a cholesteric liquid crystal display device 80C according to some embodiments of the present disclosure. The cholesteric liquid crystal display device 80A of FIG. 8A is similar to the cholesteric liquid crystal display device 70A of FIG. 7A, and the cholesteric liquid crystal display device 80B of FIG. 8B is similar to the cholesteric liquid crystal display device 70B of FIG. 7B, except for the differences as follows.

The COF C8 is disposed above the FPC F8 at the right side of the substrate 112. The FPC F8 covers a portion of the circuit pattern layer 132 but does not cover the via structure 720. The COF C8 is electrically connected to the via structure 720 and the circuit pattern layer 132. The two circuit pattern layers 132 and 134 can be electrically connected through the via structure 720. The via structure 720 can be, or include, a conductive material such as a metal or metal alloy.

In addition, as shown in FIG. 8C, the COG G8 is disposed between the FPC F8 and the liquid crystal layer 120. The COG G8 is disposed on the substrate 112 rather than the FPC F8 in order to improve the reliability of the cholesteric liquid crystal display device 80C.

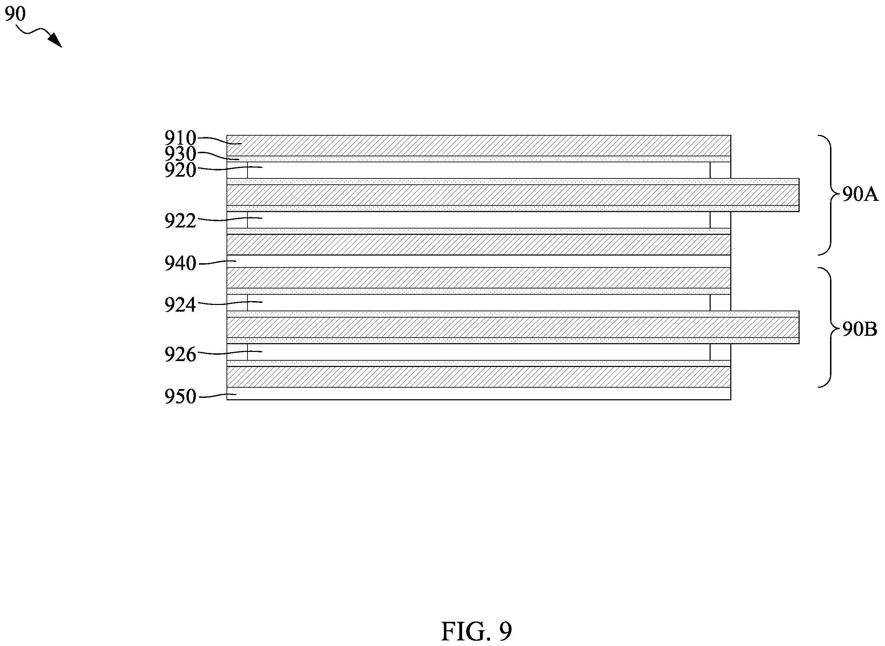

FIG. 9 is a cross-sectional view of a cholesteric liquid crystal display device 90 stacking two display modules 90A and 90B according to some embodiments of the present disclosure. The cholesteric liquid crystal display device of FIG. 9 include two display modules 90A and 90B. Each of the display modules 90A and 90B can correspond to or be included in the cholesteric liquid crystal display devices of FIG. 1A to FIG. 8C with the corresponding driving circuits.

In some embodiments, the display module 90A can modulate or adjust green light, and the display module 90B can modulate or adjust red light. The display module 90A can include, for example, the substrate 910, the liquid crystal layers 920 and 922, and the circuit pattern layer 930. The liquid crystal layers 920 and 922 can include a right-handed cholesteric liquid crystal and a left-handed cholesteric liquid crystal to reflect the green light. The display module 90B can include, for example, the liquid crystal layers 924 and 926. The liquid crystal layers 924 and 926 can include a right-handed cholesteric liquid crystal and a left-handed cholesteric liquid crystal to reflect the red light.

In addition, An OCA (optical clear adhesive) layer 940 is formed between the display modules 90A and 90B. The OCA layer can include a green-filtering OCA layer formed between the display modules 90A and 90B. A back absorbing layer 950 is formed below the display module 90B. It should be noted that the colors indicated for the display modules 90A and 90B are not intended in a limiting sense. The display modules 90A and 90B can be used to control or modulate any two of red, green, and blue. The type of the OCA layer 940 can be selected or used according to the display modules 90A and 90B.

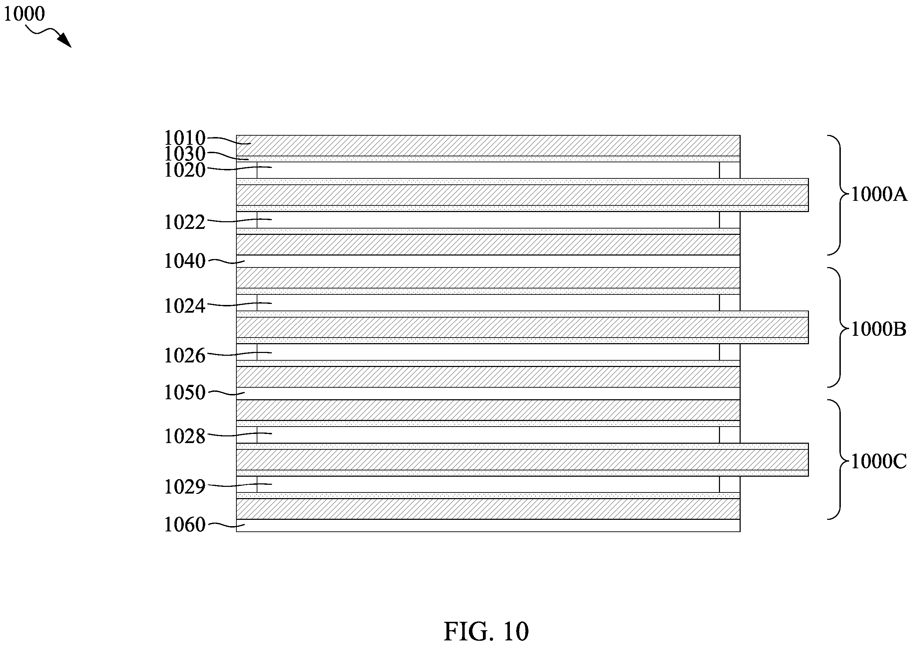

FIG. 10 is a cross-sectional view of a cholesteric liquid crystal display device 1000 stacking three display modules 1000A, 1000B and 1000C according to some embodiments of the present disclosure. The cholesteric liquid crystal display device 1000 of FIG. 10 includes three display modules 1000A, 1000B, and 1000C. Each of the display modules 1000A, 1000B, and 1000C can correspond to or be included in the cholesteric liquid crystal display devices of FIG. 1A to FIG. 8C with the corresponding driving circuits.

The display module 1000A can modulate or adjust the blue light, the display module 1000B can modulate or adjust green light, and display module 1000C can modulate or adjust red light. The display module 1000A can include, for example, the substrate 1010, the liquid crystal layers 1020 and 1022, and the circuit pattern layer 1030. The liquid crystal layers 1020 and 1022 can include a right-handed cholesteric liquid crystal and a left-handed cholesteric liquid crystal to reflect the blue light. The display module 1000B can include, for example, the liquid crystal layers 1024 and 1026. The liquid crystal layers 1024 and 1026 can include a right-handed cholesteric liquid crystal and a left-handed cholesteric liquid crystal to reflect the green light. The display module 1000C can include, for example, the liquid crystal layers 1028 and 1029. The liquid crystal layers 1028 and 1029 can include a right-handed cholesteric liquid crystal and a left-handed cholesteric liquid crystal to reflect the red light.

In some embodiments, the OCA layer 1040 is formed between the display modules 1000A and 1000B. The OCA layer 1040 can include a blue-filtering OCA layer formed between the display modules 1000A and 1000B. The OCA layer 1050 is formed between the display modules 1000B and 1000C. The OCA layer 1050 can include a blue-filtering and green-filtering OCA layer formed between the display modules 1000B and 1000C. A back absorbing layer 1060 is formed below the display module 1000C. It should be noted that the colors indicated for the display modules 1000A, 1000B and 1000C are not intended in a limiting sense. The display modules 1000A, 1000B and 1000C can be used to control or modulate any two of red, green, and blue. The type of the OCA layers 1040 and 1050 can be selected or used according to the display modules 1000A, 1000B and 1000C.

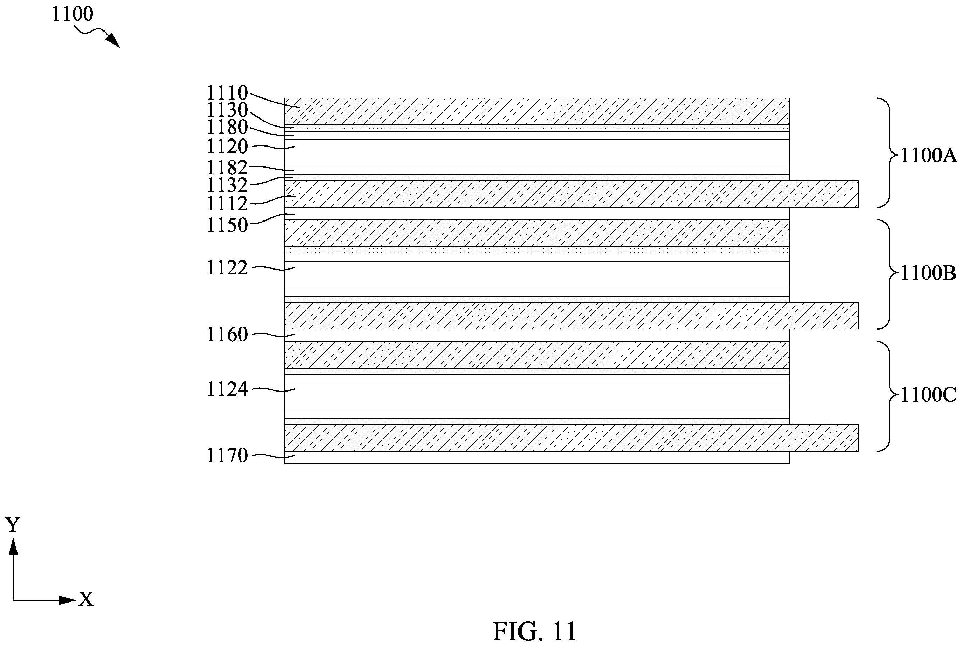

FIG. 11 is another cross-sectional view of a cholesteric liquid crystal display device 1100 stacking three display modules 1100A, 1100B and 1100C according to some embodiments of the present disclosure. Each of the display modules 1100A, 1100B and 1100C can correspond to or be included in the cholesteric liquid crystal display devices of FIG. 1A to FIG. 8C with the corresponding driving circuits.

The display module 1100A can include the substrates 1110 and 1112, the liquid crystal layer 1120, the polyimide layers 1180 and 1182, and the ITO electrodes 1130 and 1132. The substrates 1110 and 1112 can be glass substrates. The liquid crystal layer 1120 can include a blue color sub-pixel layer to modulate the blue light. The liquid crystal layer 1120 is surrounded by the polyimide layers 1180 and 1182 along the Y-axis. The polyimide layers 1180 and 1182 are surrounded by the ITO electrodes 1130 and 1132 along the Y-axis.

The display module 1100B can be similar to the display module 1100A. The liquid crystal layer 1122 of the display module 1100B can include a green color sub-pixel layer to modulate the green light. The display module 1100C can be similar to the display module 1100A. The liquid crystal layer 1124 of the display module 1100C can include a red color sub-pixel layer to modulate the red light. In addition, the display modules 1100A and 1100B are separated by the OCA layer 1150. The display modules 1100B and 1100C are separated by the OCA layer 1160. The OCA layer 1170 is provided below the display module 1100C.

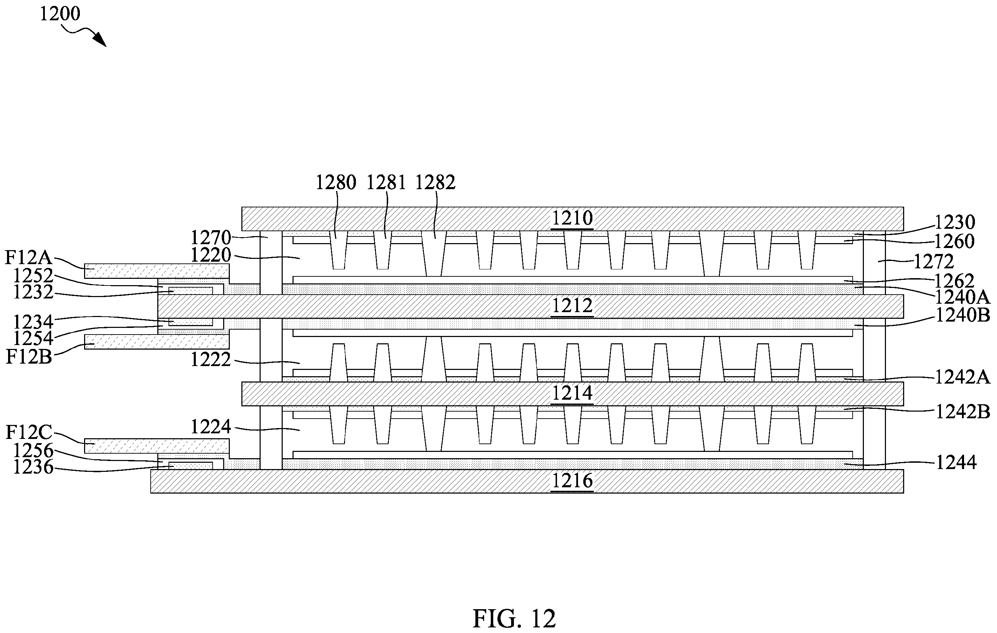

FIG. 12 is a cross-sectional view of a cholesteric liquid crystal display device 1200 according to some embodiments of the present disclosure. The cholesteric liquid crystal display device 1200 at least includes the substrates 1210, 1212, 1214 and 1216, the liquid crystal layers 1220, 1222 and 1224, the alignment layers 1260 and 1262, a transparent conductive electrode 1230, the conductive electrodes 1240A, 1240B, 1242A, 1242B and 1244, the frame sealers 1270 and 1272, and the support columns 1280, 1281 and 1282.

The metal 1232 is disposed on the substrate 1212, the metal 1232 is surrounded by the insulation layer 1252, and the insulation layer 1252 is covered by the conductive electrode 1240A. The FPC F12A is disposed above the metal 1232, the insulation layer 1252 and the conductive electrode 1240A to drive the cholesteric liquid crystal display device 1200. The metal 1234 is disposed below the substrate 1212, the metal 1234 is surrounded by the insulation layer 1254, and the insulation layer 1254 is covered by the conductive electrode 1240B. The FPC F12B is disposed below the metal 1234, the insulation layer 1254 and the conductive electrode 1240B to drive the cholesteric liquid crystal display device 1200. The metal 1236 is disposed on the substrate 1216, the metal 1236 is surrounded by the insulation layer 1256, and the insulation layer 1256 is covered by the conductive electrode 1244. The FPC F12C is disposed above the metal 1236, the insulation layer 1256 and the conductive electrode 1244 to drive the cholesteric liquid crystal display device 1200. The transparent conductive electrode 1230 can include an ITO electrode. The alignment layers 1260 and 1262 can include polyimide films.

In some embodiments, the substrates 1210 and 1214 can be support layers, and the substrates 1212 and 1216 can be conductive layers electrically connected to the metals 1232, 1234 and 1236, so that the cholesteric liquid crystal display device 1200 can include a double-sided conductive layer structure. The use of a glass substrate can be reduced to decrease the thickness of the cholesteric liquid crystal display device 1200.

In some embodiments, the left-handed liquid crystal and right-handed liquid crystal can be injected into the upper and lower liquid crystal cells, respectively. For example, the liquid crystal layer 1220 can include the left-handed liquid crystal, and the liquid crystal layer 1224 can include the right-handed liquid crystal.

In some embodiments, the liquid crystal layers 1220, 1222 and 1224 can be used to modulate blue light, green light and red light, respectively. Accordingly, the conductive electrodes 1240A and 1240B can include yellow conductive electrodes, the conductive electrodes 1242A and 1242B can include magenta conductive electrodes, and the conductive electrode 1244 can include a black conductive electrode. By utilizing the cholesteric liquid crystal display device 1200, the OCA layers 1150 and 1160 of the cholesteric liquid crystal display device 1100 in FIG. 11 can be replaced by the colored film and colored electrode. Moreover, the conductive electrode 1244 can include a black MoOx layer coated on the substrate 1216 to replace the OCA layer 1170 in FIG. 11. The OCA layer 1170 can be a black absorbing layer. The reflectivity and contrast of the cholesteric liquid crystal display device 1200 can thus be improved and the number of lamination processes can be reduced to decrease the manufacturing cost.

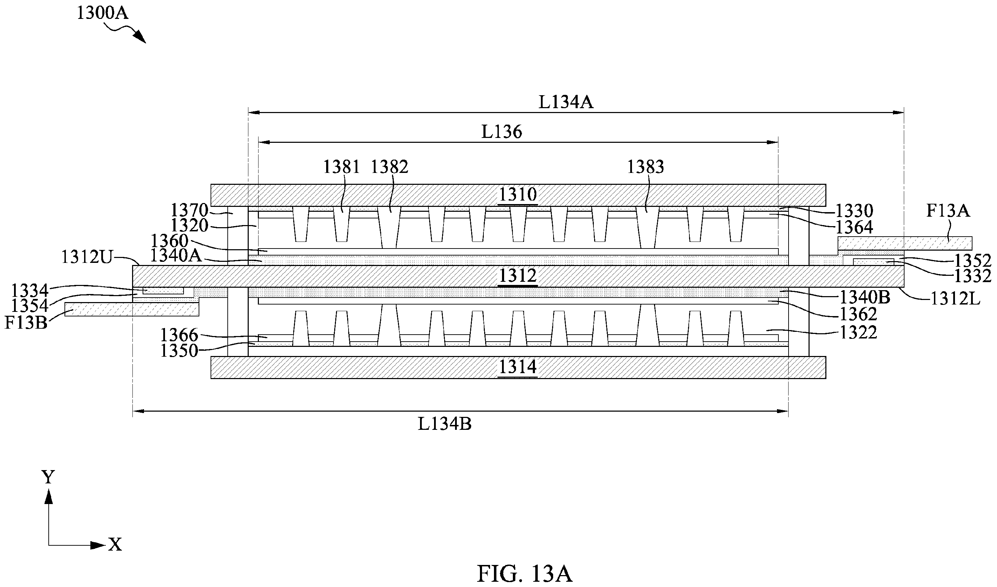

FIG. 13A is a cross-sectional view of a cholesteric liquid crystal display device 1300A according to some embodiments of the present disclosure. The cholesteric liquid crystal display device 1300A at least includes the substrates 1310, 1312 and 1314, the liquid crystal layers 1320 and 1322, the alignment layers 1360, 1362, 1364 and 1366, a transparent conductive electrode 1330, the conductive electrodes 1340A, 1340B, and 1350, the frame sealer 1370, and the support columns 1381, 1382 and 1383.

The liquid crystal layers 1320 and 1322 can include the left-handed liquid crystal and the right-handed liquid crystal. The conductive electrode 1340A is formed on the upper surface 1312U of the substrate 1312 and extends along the X-axis. The conductive electrode 1340B is formed on the lower surface 1312L of the substrate 1312 and extends along the X-axis. The alignment layer 1360 is disposed on the conductive electrode 1340A and extends along the X-axis. The alignment layer 1360 may include a length L136 along the X-axis. The conductive electrode 1340A may include a length L134A along the X-axis. The conductive electrode 1340B may include a length L134B along the X-axis. In some embodiments, the length L134A of the conductive electrode 1340A is greater than the length L136 of the alignment layer 1360 to form a driving circuit including the FPC F13A. The length L134B of the conductive electrode 1340B is greater than the length L136 of the alignment layer 1360 to form another driving circuit including the FPC F13B. The length L134A of the conductive electrode 1340A is substantially identical to the length L134B of the conductive electrode 1340B.

In some embodiments, the support columns 1381 to 1383 extend along the Y-axis. The support columns 1381 to 1383 can protrude from the transparent conductive electrode 1330 below the substrate 1310 towards the substrate 1312. The support columns 1381 to 1383 can be distributed between two frame sealers at the same elevation level. The support columns 1381 to 1383 can have different sizes. A portion of the support columns 1381 to 1383, for example, the support column 1383, can be in direct contact with the alignment layer 1360, to enhance the sturdiness and reliability of the cholesteric liquid crystal display device 1300A.

In some embodiments, the FPCs F13A and F13B are formed at different sides of the cholesteric liquid crystal display device 1300A. The metal 1332 is disposed on the substrate 1312, the metal 1332 is surrounded by the insulation layer 1352, and the insulation layer 1352 is covered by the conductive electrode 1340A. The FPC F13A is disposed above the metal 1332, the insulation layer 1352 and the conductive electrode 1340A to drive the cholesteric liquid crystal display device 1300A. In addition, the metal 1334 is disposed below the substrate 1312, the metal 1334 is surrounded by the insulation layer 1354, and the insulation layer 1354 is covered by the conductive electrode 1340B. The FPC F13B is disposed below the metal 1334, the insulation layer 1354 and the conductive electrode 1340B to drive the cholesteric liquid crystal display device 1300A.

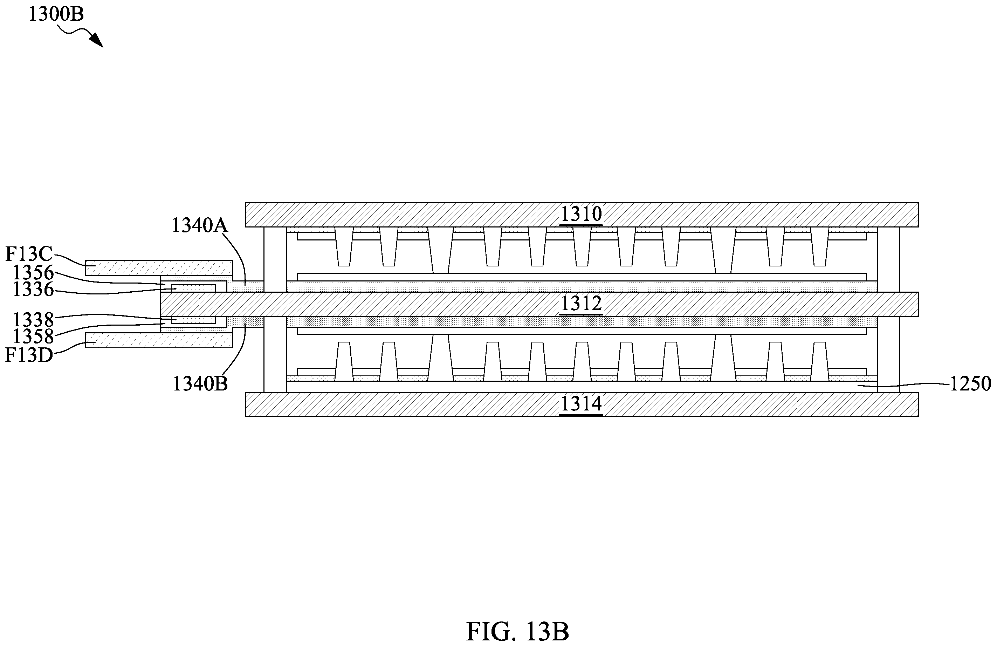

FIG. 13B is another cross-sectional view of a cholesteric liquid crystal display device 1300B according to some embodiments of the present disclosure. The cholesteric liquid crystal display device 1300B of FIG. 13B is similar to the cholesteric liquid crystal display device 1300A of FIG. 13A, except for the differences as follows.

In some embodiments, the FPCs F13C and F13D are formed at the same side of the cholesteric liquid crystal display device 1300B. The metal 1336 is disposed on the substrate 1312, the metal 1336 is surrounded by the insulation layer 1356, and the insulation layer 1356 is covered by the conductive electrode 1340A. The FPC F13C is disposed above the metal 1336, the insulation layer 1356 and the conductive electrode 1340A to drive the cholesteric liquid crystal display device 1300B. In addition, the metal 1338 is disposed below the substrate 1312, the metal 1338 is surrounded by the insulation layer 1358, and the insulation layer 1358 is covered by the conductive electrode 1340B. The FPC F13D is disposed below the metal 1338, the insulation layer 1358 and the conductive electrode 1340B to drive the cholesteric liquid crystal display device 1300B.

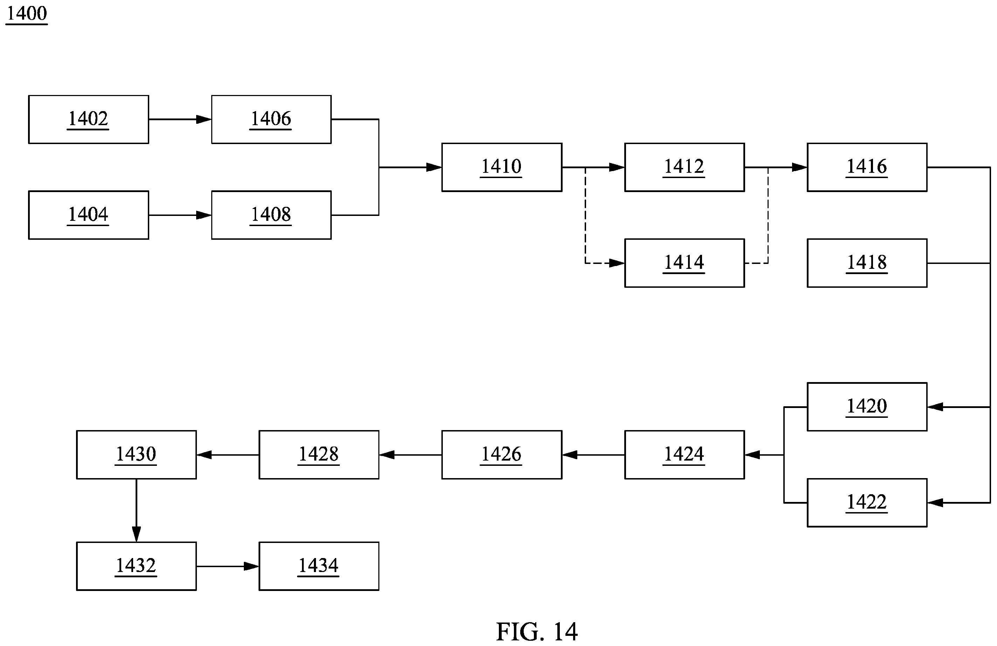

FIG. 14 illustrates a flow chart 1400 including operations for manufacturing a cholesteric liquid crystal display device, such as the cholesteric liquid crystal display device 1300A in FIG. 13A, according to some embodiments of the present disclosure. In operation 1402, the polyimide film on the color-filter side, such as the alignment layer 1364, is formed. In operation 1404, the polyimide film on the thin-film-transistor (TFT) side, such as the alignment layer 1360, is formed. In operation 1406, the first sealing process is executed. In operation 1408, the liquid crystal layer 1320, such as the right-handed liquid crystal, is injected. In operation 1410, the assembly process is performed for the liquid crystal layer 1320 and its corresponding alignment layers to form a first assembly structure. In operation 1412, both sides of the first assembly structure are slimmed. In operation 1414, the cholesteric liquid crystal display device 1300A is flipped so as to perform subsequent operations.

In operation 1416, the polyimide film on the color-filter side, such as the alignment layer 1366, is formed. In operation 1418, the polyimide film on the TFT side, such as the alignment layer 1362, is formed. In operation 1420, the second sealing process is executed. In operation 1422, the liquid crystal layer 1322, such as the left-handed liquid crystal, is injected. In operation 1424, the assembly process is performed for the liquid crystal layer 1322 and its corresponding alignment layers to form a second assembly structure. In operation 1426, unilateral slimming is performed for the second assembly structure. In operation 1428, both sides of the first and second assembly structures are cut to provide a first display module of a first color. In operation 1430, a first FPC for the first assembly structure, such as the FPC 13A, is bonded. In operation 1432, a second FPC for the second assembly structure, such as the FPC 13B, is bonded. In operation 1434, a three-layer lamination process is executed so that the first display module of a first color is stacked with other two display modules of two different colors. In some embodiments, the first LCD process can be performed to complete the upper R-OC (red open cell) right-handed liquid crystal layer 1320, which can then be matched with another piece of support layer of the substrate 1210. The second LCD process can be carried out together to complete the lower R-OC left-handed liquid crystal layer 1322, which can then be matched with another piece of support layer of the substrate 1214.

While the disclosed flow chart 1400 is illustrated and described below as a series of acts or events, it will be appreciated that the illustrated ordering of such acts or events are not to be interpreted in a limiting sense. For example, some operations may occur in different orders and/or concurrently with other acts or events apart from those illustrated and/or described herein. In addition, not all illustrated acts may be required to implement one or more aspects or embodiments of the description herein. Further, one or more of the acts depicted herein may be carried out in one or more separate acts and/or phases.

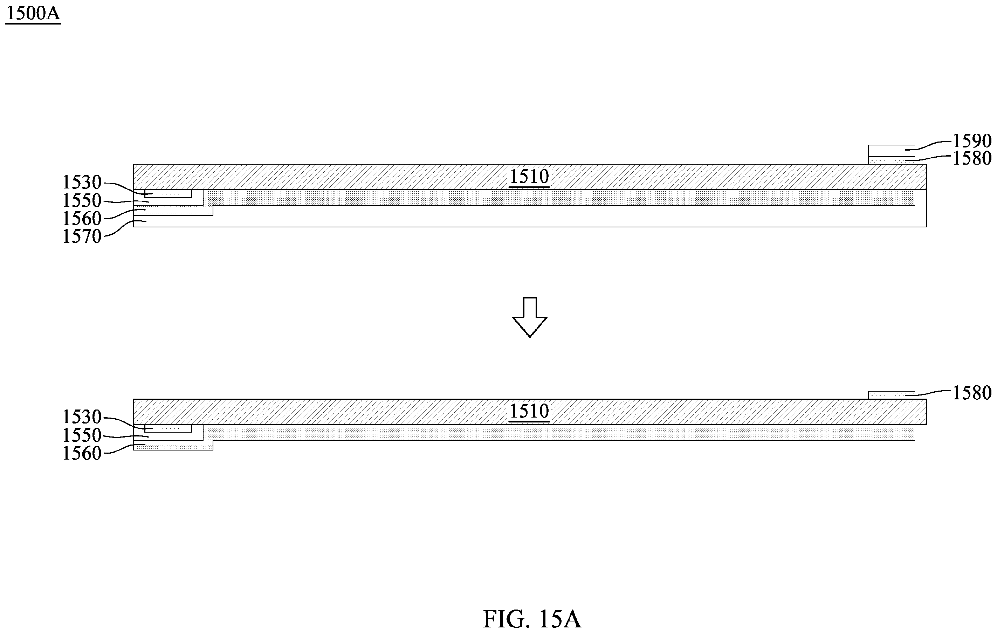

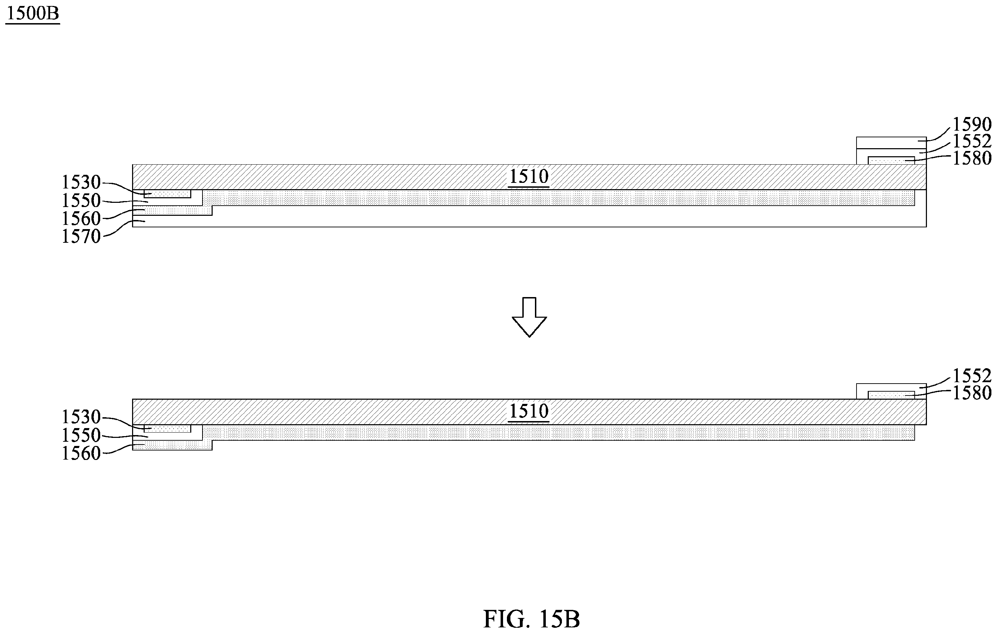

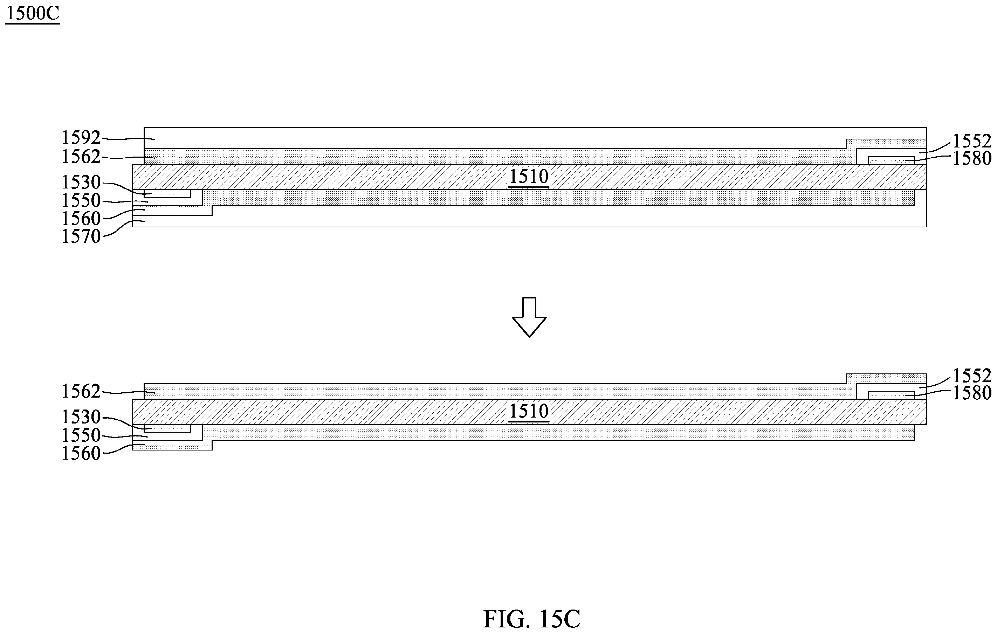

FIG. 15A, 15B and 15C illustrates some operations for manufacturing the cholesteric liquid crystal display devices 1500A, 1500B and 1500C according to some embodiments of the present disclosure. In some embodiments, the bottom side of the cholesteric liquid crystal display device 1500A can be coated with the protection layer 1570, and the front side of the cholesteric liquid crystal display devices 1500A can be provided with a peripheral conductive layer 1580.

As shown in FIG. 15A, the metal 1530 is formed below the substrate 1510, and the metal 1530 is surrounded by the insulation layer 1550. The conductive electrode 1560 is formed to cover the insulation layer 1550 and the substrate 1510. The protection layer 1570 is formed to cover the conductive electrode 1560. The conductive layer 1580 is formed on the substrate 1510. The photoresist 1590 is formed on the conductive layer 1580. After the stripping, the protection layer 1570 and the photoresist 1590 can be removed to expose the conductive layer 1580 on the front side and the conductive electrode 1560 on the bottom side.

As shown in FIG. 15B, the cholesteric liquid crystal display device 1500B can be similar to the cholesteric liquid crystal display device 1500A. However, the conductive layer 1580 is surrounded by the insulation layer 1552, and the photoresist 1590 is formed on the insulation layer 1552. After the stripping, the protection layer 1570 and the photoresist 1590 can be removed to expose the insulation layer 1552 on the front side and the conductive electrode 1560 on the bottom side.

As shown in FIG. 15C, the cholesteric liquid crystal display device 1500C can be similar to the cholesteric liquid crystal display device 1500B. However, the conductive electrode 1562 is disposed to cover the substrate 1510 and the insulation layer 1552, and the photoresist 1592 covers the conductive electrode 1562. After the stripping, the protection layer 1570 and the photoresist 1592 can be removed to expose the conductive electrode 1562 on the front side and the conductive electrode 1560 on the bottom side. Through the double-sided conductive electrode process as shown in FIG. 15C, the double-sided conductive structural layer is completed, and matched with the support layer.

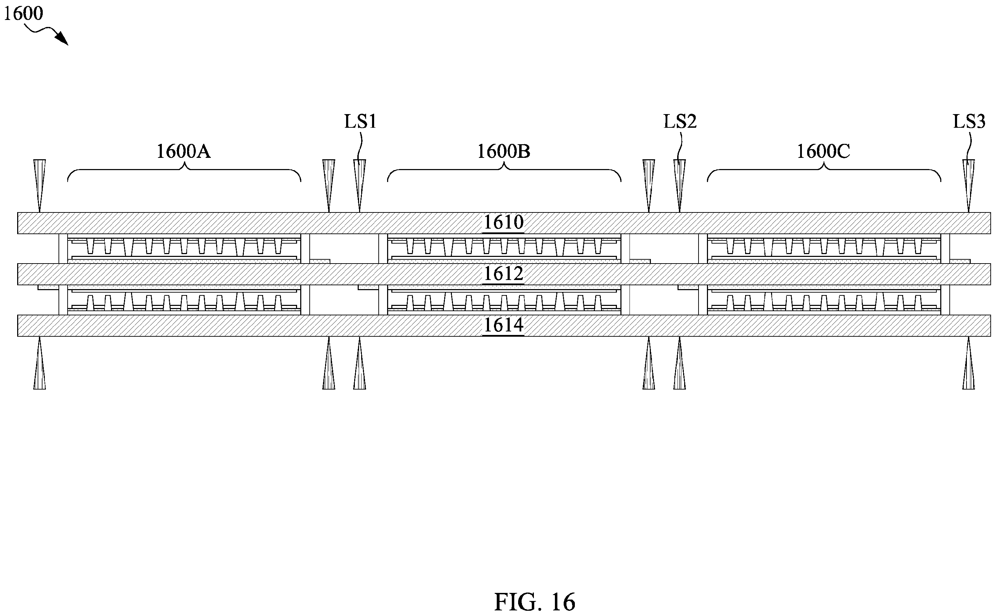

FIG. 16 is a cross-sectional view of cutting the cholesteric liquid crystal display device 1600 according to some embodiments of the present disclosure. The cutting of the cholesteric liquid crystal display device 1600 can correspond to the operation 1428 in FIG. 14. The cholesteric liquid crystal display device 1600 includes three display modules 1600A, 1600B and 1600C. The display modules 1600A, 1600B and 1600C can share the substrates 1610, 1612 and 1614. The substrates 1610 and 1614 can be support layers, and the substrate 1612 can be a conductive layer.

In some embodiments, the glass thinning process and laser fusion glass cutting process as shown in FIG. 16 are carried out to cut the large panel into single panels. The laser lights LS1, LS2 and LS3 can be used to cut and separate the display modules 1600A, 1600B and 1600C. For example, the display modules 1600A and 1600B are separated by applying the laser light LS1, and the display modules 1600B and 1600C are separated by applying the laser light LS2. The double-sided FPC bonding process can be executed to obtain the R-OC panel semi-finished product. Furthermore, the LCM (LCD module) process can be utilized to perform double-sided FPC bonding process to complete, for example, the R-OC panel semi-finished product.

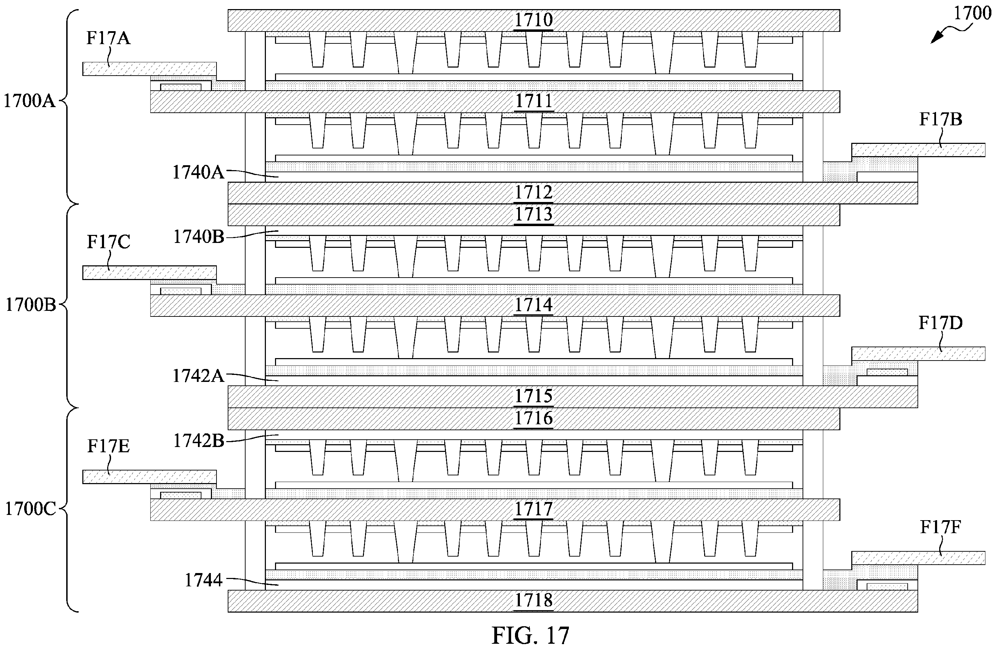

FIG. 17 is a cross-sectional view of a cholesteric liquid crystal display device 1700 stacking three display modules 1700A, 1700B and 1700C according to some embodiments of the present disclosure. Each of the display modules 1700A, 1700B and 1700C can be similar to the cholesteric liquid crystal display device 1300A of FIG. 13A. For example, the display modules 1700A, 1700B and 1700C can correspond to B-OC (blue open cell), G-OC (green open cell) and R-OC. Through a three-layer lamination process, semi-finished products R-OC, G-OC, and B-OC can be laminated or stacked to provide the finished product.

The display module 1700A can include a B-OC. The display module 1700A can include two FPCs F17A and F17B and three substrates 1710, 1711 and 1712. The FPCs F17A and F17B are provided on opposite sides of the display module 1700A. The circuit pattern layer 1740A on the substrate 1712 can include a yellow film. The upper structure of the substrate 1711, including but not limited to the corresponding electrode and polyimide layer, can still be a conductive layer structure. The lower structure of the substrate 1711, including but not limited to the corresponding electrode and polyimide layer, can be changed from a conductive layer structure to a support layer structure.

The display module 1700B can include a G-OC. The display module 1700B can include two FPCs F17C and F17D and three substrates 1713, 1714 and 1715. The FPCs F17C and F17D are provided on opposite sides of the display module 1700B. The circuit pattern layer 1740B below the substrate 1713 can include a yellow film. The circuit pattern layer 1742A on the substrate 1715 can include a magenta film. The upper structure of the substrate 1714, including but not limited to the corresponding electrode and polyimide layer, can still be a conductive layer structure. The lower structure of the substrate 1714, including but not limited to the corresponding electrode and polyimide layer, can be changed from a conductive layer structure to a support layer structure.

The display module 1700C can include an R-OC. The display module 1700C can include two FPCs F17E and F17F and three substrates 1716, 1717 and 1718. The FPCs F17E and F17F are provided on opposite sides of the display module 1700C. The circuit pattern layer 1742B below the substrate 1716 can include a magenta film. The circuit pattern layer 1744 on the substrate 1718 can include a black film. The upper structure of the substrate 1717, including but not limited to the corresponding electrode and polyimide layer, can still be a conductive layer structure. The lower structure of the substrate 1717, including but not limited to the corresponding electrode and polyimide layer, can be changed from a conductive layer structure to a support layer structure.

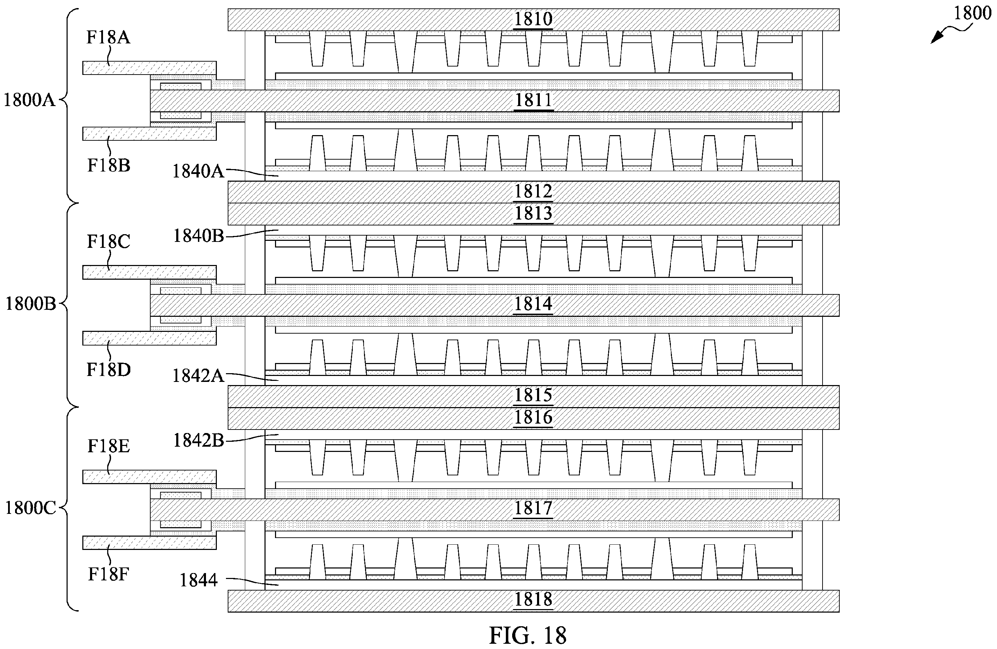

FIG. 18 is another cross-sectional view of a cholesteric liquid crystal display device 1800 stacking three display modules 1800A, 1800B and 1800C according to some embodiments of the present disclosure. The display module 1800A can include a B-OC. The display module 1800A can include two FPCs F18A and F18B and three substrates 1810, 1811 and 1812. The FPCs F18A and F18B are provided on the same side of the display module 1800A. The circuit pattern layer 1840A on the substrate 1812 can include a yellow film. The upper structure of the substrate 1811, including but not limited to the corresponding electrode and polyimide layer, can still be a conductive layer structure. The lower structure of the substrate 1811, including but not limited to the corresponding electrode and polyimide layer, can be changed from a conductive layer structure to a support layer structure.

The display module 1800B can include a G-OC. The display module 1800B can include two FPCs F18C and F18D and three substrates 1813, 1814 and 1815. The FPCs F18C and F18D are provided on the same side of the display module 1800B. The circuit pattern layer 1840B below the substrate 1813 can include a yellow film. The circuit pattern layer 1842A on the substrate 1815 can include a magenta film. The upper structure of the substrate 1814, including but not limited to the corresponding electrode and polyimide layer, can still be a conductive layer structure. The lower structure of the substrate 1814, including but not limited to the corresponding electrode and polyimide layer, can be changed from a conductive layer structure to a support layer structure.

The display module 1800C can include an R-OC. The display module 1800C can include two FPCs F18E and F18F and three substrates 1816, 1817 and 1818. The FPCs F18E and F18F are provided on the same side of the display module 1800C. The circuit pattern layer 1842B below the substrate 1816 can include a magenta film. The circuit pattern layer 1844 on the substrate 1818 can include a black film. The upper structure of the substrate 1818, including but not limited to the corresponding electrode and polyimide layer, can still be a conductive layer structure. The lower structure of the substrate 1818, including but not limited to the corresponding electrode and polyimide layer, can be changed from a conductive layer structure to a support layer structure.

The present disclosure provides a cholesteric liquid crystal display device, which differs from conventional LCD display devices as it belongs to the category of reflective displays, also known as electronic paper displays. It can completely eliminate the need for a backlight source, by utilizing ambient light that strikes the electronic paper display screen and is then refracted to the viewer's eyes, akin to the principles of viewing traditional paper or objects in daily life.

Based on the foregoing, the present disclosure provides a cholesteric liquid crystal display device with a driving circuit that utilizes left-handed cholesteric liquid crystal and right-handed cholesteric liquid crystal. The driving circuit can include an FPC, a COF, a via and/or other electronic elements, and can be provided at one or two sides of the display structure as needed. Therefore, the cholesteric liquid crystal display device can increase reflectivity and provide high-quality display color at a wider viewing angle.

As used herein, spatially relative terms, such as "beneath," "below," "lower," "above," "upper," "higher," "left," "right" and the like, may be used herein for ease of description to describe one element or feature's relationship to another element(s) or feature(s) as illustrated in the figures. The spatially relative terms are intended to encompass different orientations of the device in use or operation in addition to the orientation depicted in the figures. The apparatus may be otherwise oriented (rotated 90 degrees or at other orientations) and the spatially relative descriptors used herein may likewise be interpreted accordingly. It should be understood that when an element is referred to as being "connected to" or "coupled to" another element, it may be directly connected to or coupled to the other element, or intervening elements may be present.

As used herein, the terms "approximately," "substantially," "substantial" and "about" are used to describe and account for small variations. When used in conduction with an event or circumstance, the terms can refer to instances in which the event of circumstance occurs precisely as well as instances in which the event or circumstance occurs to a close approximation. As used herein with respect to a given value or range, the term "about" generally means within ±10%, ±5%, ±1%, or ±0.5% of the given value or range. Ranges can be expressed herein as from one endpoint to another endpoint or between two endpoints. All ranges disclosed herein are inclusive of the endpoints, unless specified otherwise. The term "substantially coplanar" can refer to two surfaces within micrometers (µm) of lying along a same plane, such as within 10 µm, within 5 µm, within 1 µm, or within 0.5 µm of lying along the same plane. When referring to numerical values or characteristics as "substantially" the same, the term can refer to the values lying within ±10%, ±5%, ±1%, or ±0.5% of an average of the values.

Several embodiments of the disclosure and features of details are briefly described above. The embodiments described in the disclosure may be easily used as a basis for designing or modifying other processes and structures for realizing the same or similar objectives and/or obtaining the same or similar advantages introduced in the embodiments of the disclosure. Such equivalent constructions do not depart from the spirit and scope of the disclosure, and various variations, replacements, and modifications can be made without departing from the spirit and scope of the disclosure.

## Claims

1. A double-layer cholesteric liquid crystal display device, comprising:
a first liquid crystal layer;
a second liquid crystal layer, formed above the first liquid crystal layer, wherein one of the first liquid crystal layer and the second liquid crystal layer comprises a left-handed cholesteric liquid crystal, and the other one of the first liquid crystal layer and the second liquid crystal layer comprises a right-handed cholesteric liquid crystal;
a substrate, formed between the first liquid crystal layer and the second liquid crystal layer;
a first circuit pattern layer, formed on a lower surface of the substrate for driving the first liquid crystal layer;
a second circuit pattern layer, formed on an upper surface of the substrate for driving the second liquid crystal layer; and
a first driving circuit, electrically connected to the first circuit pattern layer or the second circuit pattern layer to control the double-layer cholesteric liquid crystal display device.

2. The double-layer cholesteric liquid crystal display device of Claim 1, wherein the first driving circuit is electrically connected to both the first circuit pattern layer and the second circuit pattern layer.

3. The double-layer cholesteric liquid crystal display device of Claim 1, further comprising:
a second driving circuit, electrically connected to the first circuit pattern layer or the second circuit pattern layer to control the double-layer cholesteric liquid crystal display device.

4. The double-layer cholesteric liquid crystal display device in any of Claims 1 to 3, wherein the first driving circuit and the second driving circuit are formed on opposite sides of the substrate, the first driving circuit is electrically connected to the second circuit pattern layer, and the second driving circuit is electrically connected to the first circuit pattern layer.

5. The double-layer cholesteric liquid crystal display device of Claim 1, wherein the first driving circuit comprises a flexible printed circuit and a first chip.

6. The double-layer cholesteric liquid crystal display device in any of Claims 1 to 5, wherein the first chip is provided between the FPC and the second circuit pattern layer.

7. The double-layer cholesteric liquid crystal display device in any of Claims 1 to 5, wherein the first chip is formed above the FPC.

8. The double-layer cholesteric liquid crystal display device in any of Claims 1 to 7, further comprising:
a second chip, disposed on the second circuit pattern layer, and formed between the FPC and the second liquid crystal layer.

9. A double-layer cholesteric liquid crystal display device, comprising:
a first liquid crystal layer, extending along a first direction;
a second liquid crystal layer, formed above the first liquid crystal layer, wherein one of the first liquid crystal layer and the second liquid crystal layer comprises a left-handed cholesteric liquid crystal, and the other one of the first liquid crystal layer and the second liquid crystal layer comprises a right-handed cholesteric liquid crystal;
a first substrate, extending along the first direction, formed between the first liquid crystal layer and the second liquid crystal layer;
a first conductive electrode, extending along the first direction, formed on a lower surface of the first substrate for driving the first liquid crystal layer;
a second conductive electrode, formed on an upper surface of the first substrate for driving the second liquid crystal layer; and
a frame sealer, extending along a second direction vertical to the first direction, wherein the first conductive electrode extends outside the frame sealer so that the frame sealer is surrounded by the first conductive electrode.

10. The double-layer cholesteric liquid crystal display device of Claim 9, further comprising:
a first alignment layer, extending along the first direction, and formed below the first conductive electrode; and
a second alignment layer, formed above the second conductive electrode.

11. The double-layer cholesteric liquid crystal display device in any of Claims 9 to 10, wherein a length of the first conductive electrode is greater than a length of the first alignment layer, and a length of the second conductive electrode is greater than that of the second alignment layer.

12. The double-layer cholesteric liquid crystal display device in any of Claims 9 to 10, further comprising:
a second substrate, extending along the first direction, wherein the second liquid crystal layer is provided between the first substrate and the second substrate; and
a plurality of support columns, extending along the second direction, wherein the support columns protrude from the second substrate toward the first substrate.

13. The double-layer cholesteric liquid crystal display device in any of Claims 9 to 12, wherein a portion of the support columns are in contact with the second alignment layer.

14. The double-layer cholesteric liquid crystal display device in any of Claims 9 to 13, further comprising:
a metal layer, formed on the first substrate; and
a flexible printed circuit (FPC), formed above the metal layer, wherein the second conductive electrode extends between the metal layer and the FPC.

15. The double-layer cholesteric liquid crystal display device in any of Claims 9 to 14, further comprising:
an insulation layer, wherein the insulation layer surrounds the metal layer and is covered by the second conductive electrode.
